# EUROPEAN PATENT APPLICATION

(11) **EP 4 668 841 A1**
(43) Date of publication of application: **24.12.2025**
(21) Application number: 23921743.3
(22) Date of filing: 15.02.2023
(51) Int. Cl.: H04W 28/02

(54) **INFORMATION PROCESSING METHOD AND APPARATUS, AND COMMUNICATION SYSTEM**

(71) Applicant: FUJITSU LIMITED, Kawasaki-shi, Kanagawa 211-8588 (JP)
(72) Inventor: LI, Guorong, Beijing 100022 (CN); JIA, Meiyi, Beijing 100022 (CN); YI, Su, Beijing 100022 (CN); WANG, Xin, Beijing 100022 (CN)
(74) Representative: Haseltine Lake Kempner LLP
(86) International application number: PCT/CN2023/076152
(87) International publication number: WO 2024/168579

(57) **Abstract**

Provided in the embodiments of the present application are an information processing method and apparatus, and a communication system. Delay information comprises a first remaining time and a first time point associated with the first remaining time, and/or the delay information comprises a second remaining time, wherein the second remaining time is a second deadline and/or a time associated with a second time point, such that a network device can accurately determine delay information of a service, which helps the network device to allocate uplink resources which satisfy delay requirements of the service, and is conducive to ensuring the QoS of the service.

## Description

### Field

This disclosure relates to the field of communication.

### Background

3GPP began researching enhancements for extended reality (XR) services in Release 18. XR services are, for example, all environments and human-computer interactions of combinations of realities and virtualities generated by computer technologies and wearable devices. XR services may include virtual reality (VR) services, augmented reality (AR) services, and mixed reality (MR) services.

For XR services with strict latency constraints, in order to satisfy their QoS (quality of service), a scheduler with latency information needs to be used. The scheduler with delay information is implementable in downlink, because a base station (e.g. gNB) knows QoS characteristics of a user (e.g. via 5QI) and when XR frames (packets) arrive. Hence, the base station may know a degree of urgency of scheduling buffered data. However, for uplink, a current BSR (buffer status report) only provides a size of a volume of the buffered data but not information on how long data in the UE (user equipment) have been buffered, a gNB scheduler is unable to accurately know a buffering time or latency information of the data in the UE.

It should be noted that the above description of the background is merely provided for clear and complete explanation of this disclosure and for easy understanding by those skilled in the art. And it should not be understood that the above technical solution is known to those skilled in the art as it is described in the background of this disclosure.

### Summary

For XR, a UE may report delay information to a network. For example, for XR, data volume information associated with delay information (such as remaining time) is introduced.

It was found by the inventors that in some cases (such as uplink scheduling delay, etc.), delay information generated by a UE (such as a remaining time) may take some time to be correctly received by a network device (such as a gNB). In this case, at the moment when the gNB receives the delay information, as continuous changes in the delay information over time, the delay information is no longer up-to-date. Therefore, even if gNB uses the delay information for uplink scheduling, expected results are unable to be achieved.

In order to solve at least one of the above problems, embodiments of this disclosure provide an information processing method and apparatus and a communication system.

According to one aspect of the embodiments of this disclosure, there is provided an information processing method, applicable to a terminal equipment, the method including: triggering delay information report; and transmitting the delay information to a network device, the delay information including a first remaining time and a first time point associated with the first remaining time, and/or, the delay information including a second remaining time, the second remaining time being a second deadline and/or a time associated with a second time point.

According to another aspect of the embodiments of this disclosure, there is provided an information processing method, applicable to a network device, the method including: receiving delay information from a terminal equipment, the delay information including a first remaining time and a first time point associated with the first remaining time, and/or, the delay information including a second remaining time, the second remaining time being a second deadline and/or a time associated with a second time point.

According to a further aspect of the embodiments of this disclosure, there is provided an information processing apparatus, applicable to a terminal equipment, the apparatus including: a triggering unit configured to trigger delay information report; and a transmitting unit configured to transmit the delay information to a network device, the delay information including a first remaining time and a first time point associated with the first remaining time, and/or, the delay information including a second remaining time, the second remaining time being a second deadline and/or a time associated with a second time point.

According to still another aspect of the embodiments of this disclosure, there is provided an information processing apparatus, applicable to a network device, the apparatus including: a receiving unit configured to receive delay information from a terminal equipment, the delay information including a first remaining time and a first time point associated with the first remaining time, and/or, the delay information including a second remaining time, the second remaining time being a second deadline and/or a time associated with a second time point.

According to yet another aspect of the embodiments of this disclosure, there is provided a terminal equipment, including a memory and a processor, the memory storing a computer program, and the processor being configured to execute the computer program to carry out the information processing method applicable to a terminal equipment.

According to yet still another aspect of the embodiments of this disclosure, there is provided a network device, including a memory and a processor, the memory storing a computer program, and the processor being configured to execute the computer program to carry out the information processing method applicable to a network device.

According to yet further aspect of the embodiments of this disclosure, there is provided a communication system, including the network device and the terminal equipment.

One of the advantages of the embodiments of this disclosure exists in that the delay information includes a first remaining time and a first time point associated with the first remaining time, and/or, the delay information includes a second remaining time, the second remaining time being a second deadline and/or a time associated with a second time point. Hence, a network device is able to accurately determine delay information of services, which is helpful to allocating uplink resources satisfying requirements on service delay by the network device, and is beneficial to ensure QoS of the services.

With reference to the following description and drawings, the particular embodiments of this disclosure are disclosed in detail, and the principle of this disclosure and the manners of use are indicated. It should be understood that the scope of the embodiments of this disclosure is not limited thereto. The embodiments of this disclosure contain many alternations, modifications and equivalents within the scope of the terms of the appended claims.

Features that are described and/or illustrated with respect to one embodiment may be used in the same way or in a similar way in one or more other embodiments and/or in combination with or instead of the features of the other embodiments.

It should be emphasized that the term "comprises/comprising/includes/including" when used in this specification is taken to specify the presence of stated features, integers, steps or components but does not preclude the presence or addition of one or more other features, integers, steps, components or groups thereof.

### Brief Description of the Drawings

Elements and features depicted in one drawing or embodiment of the disclosure may be combined with elements and features depicted in one or more additional drawings or embodiments. Moreover, in the drawings, like reference numerals designate corresponding parts throughout the several views and may be used to designate like or similar parts in more than one embodiments.
FIG. 1 is schematic diagram of a communication system of an embodiment of this disclosure;
FIG. 2 is a schematic diagram of a flow related to delay information of the embodiment of this disclosure;
FIG. 3 is a schematic diagram of an information processing method of an embodiment of this disclosure;
FIG. 4 is a schematic diagram of a flow related to delay information of the embodiment of this disclosure;
FIG. 5 is another schematic diagram of the flow related to delay information of the embodiment of this disclosure;
FIG. 6 is a further schematic diagram of the flow related to delay information of the embodiment of this disclosure;
FIG. 7 is still another schematic diagram of the flow related to delay information of the embodiment of this disclosure;
FIG. 8 is a schematic diagram of an information processing method of an embodiment of this disclosure;
FIG. 9 is another schematic diagram of the information processing method of the embodiment of this disclosure;
FIG. 10 is a schematic diagram of an information processing method of an embodiment of this disclosure;
FIG. 11 is a schematic diagram of an information processing method of an embodiment of this disclosure;
FIG. 12 is a schematic diagram of an information processing method of an embodiment of this disclosure;
FIG. 13 is a schematic diagram of an information processing apparatus of an embodiment of this disclosure;
FIG. 14 is a schematic diagram of an information processing apparatus of an embodiment of this disclosure;
FIG. 15 is another schematic diagram of the information processing apparatus of the embodiment of this disclosure;
FIG. 16 is a schematic diagram of an information processing apparatus of an embodiment of this disclosure;
FIG. 17 is a schematic diagram of an information processing apparatus of an embodiment of this disclosure;
FIG. 18 is a schematic diagram of an information processing apparatus of an embodiment of this disclosure;
FIG. 19 is a schematic diagram of a terminal equipment of an embodiment of this disclosure; and
FIG. 20 is a schematic diagram of a network device of an embodiment of this disclosure.

### Detailed Description of the Disclosure

These and further aspects and features of this disclosure will be apparent with reference to the following description and attached drawings. In the description and drawings, particular embodiments of the disclosure have been disclosed in detail as being indicative of some of the ways in which the principles of the disclosure may be employed, but it is understood that the disclosure is not limited correspondingly in scope. Rather, the disclosure includes all changes, modifications and equivalents coming within the terms of the appended claims.

In the embodiments of this disclosure, terms "first", and "second", etc., are used to differentiate different elements with respect to names, and do not indicate spatial arrangement or temporal orders of these elements, and these elements should not be limited by these terms. Terms "and/or" include any one and all combinations of one or more relevantly listed terms. Terms "contain", "include" and "have" refer to existence of stated features, elements, components, or assemblies, but do not exclude existence or addition of one or more other features, elements, components, or assemblies.

In the embodiments of this disclosure, single forms "a", and "the", etc., include plural forms, and should be understood as "a kind of" or "a type of" in a broad sense, but should not defined as a meaning of "one"; and the term "the" should be understood as including both a single form and a plural form, except specified otherwise. Furthermore, the term "according to" should be understood as "at least partially according to", the term "based on" should be understood as "at least partially based on", except specified otherwise.

In the embodiments of this disclosure, the term "communication network" or "wireless communication network" may refer to a network satisfying any one of the following communication standards: long term evolution (LTE), long term evolution-advanced (LTE-A), wideband code division multiple access (WCDMA), and highspeed packet access (HSPA), etc.

And communication between devices in a communication system may be performed according to communication protocols at any stage, which may, for example, include but not limited to the following communication protocols: 1G (generation), 2G, 2.5G, 2.75G, 3G, 4G, 4.5G, 5G and new radio (NR), etc., and/or other communication protocols that are currently known or will be developed in the future.

In the embodiments of this disclosure, the term "network device", for example, refers to a device in a communication system that accesses a user equipment to the communication network and provides services for the user equipment. The network device may include but not limited to the following devices: a node and/or donor in an IAB architecture, a base station (BS), an access point (AP), a transmission reception point (TRP), a broadcast transmitter, a mobile management entity (MME), a gateway, a server, a radio network controller (RNC), a base station controller (BSC), etc.

Wherein, the base station may include but not limited to a node B (NodeB or NB), an evolved node B (eNodeB or eNB), and a 5G base station (gNB), etc. Furthermore, it may include a remote radio head (RRH), a remote radio unit (RRU), a relay, or a low-power node (such as a femto, and a pico, etc.). The term "base station" may include some or all of its functions, and each base station may provide communication coverage for a specific geographical area. And a term "cell" may refer to a base station and/or its coverage area, depending on a context of the term.

In the embodiments of this disclosure, the term "user equipment (UE)" or "terminal equipment (TE) or terminal device" refers to, for example, an equipment accessing to a communication network and receiving network services via a network device. The user equipment may be fixed or mobile, and may also be referred to as a mobile station (MS), a terminal, a subscriber station (SS), an access terminal (AT), or a station, etc.

The terminal equipment may include but not limited to the following devices: a cellular phone, a personal digital assistant (PDA), a wireless modem, a wireless communication device, a hand-held device, a machine-type communication device, a lap-top, a cordless telephone, a smart cell phone, a smart watch, and a digital camera, etc.

For another example, in a scenario of the Internet of Things (IoT), etc., the terminal equipment may also be a machine or a device performing monitoring or measurement. For example, it may include but not limited to a machine-type communication (MTC) terminal, a vehicle mounted communication terminal, an industrial wireless device, a surveillance camera, a device to device (D2D) terminal, and a machine to machine (M2M) terminal, etc.

Moreover, the term "network side" or "network device side" refers to a side of a network, which may be a base station or one or more network devices including those described above. The term "user side" or "terminal side" or "terminal equipment side" refers to a side of a user or a terminal, which may be a UE, and may include one or more terminal equipments described above. "A device" may refer to a network device, and may also refer to a terminal equipment. Scenarios in the embodiments of this disclosure shall be described below by way of examples; however, this disclosure is not limited thereto.

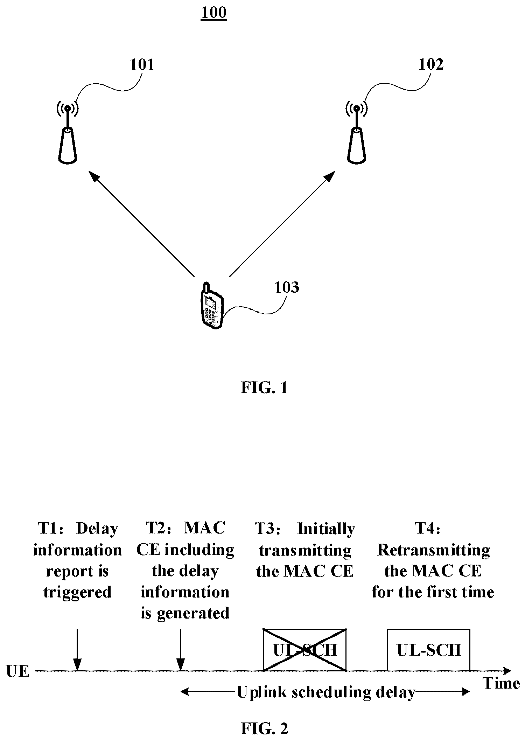

FIG. 1 is a schematic diagram of a communication system of an embodiment of this disclosure, in which a case where a terminal equipment and network devices are taken as examples is schematically shown. As shown in FIG. 1, the communication system 100 may include a first network device 101, a second network device 102 and a terminal equipment 103. For the sake of simplicity, an example having only two network devices and one terminal equipment is schematically given in FIG. 1. However, the embodiment of this disclosure is not limited thereto, and the communication system 100 may also not include a second network device 102. For example, a cell under the first network device 101 is a serving cell of the terminal equipment 103, and a cell under the second network device 102 is a non-serving cell of the terminal equipment 103; or, a cell under the first network device 101 is a primary serving cell of the terminal equipment 103, and a cell under the second network device 102 is a primary SCG (secondary cell group) cell (PSCell) of the terminal equipment 103; or, a cell under the first network device 101 is a source cell of the terminal equipment 103, and the second network device 102 is a target cell or candidate cell of the terminal equipment 103.

FIG. 2 is a schematic diagram of a flow related to delay information of the embodiment of this disclosure. As shown in FIG. 2, it is assumed that a UE triggers delay information reporting (or report) at a time (time point) T1, the delay information is determined by taking time T2 as a reference and an MAC CE (media access control layer control element) including the delay information is generated at time T2, and the MAC CE is transmitted at a time T3 for the first time (initial or new transmission), such as transmitting an MAC PDU including the MAC CE. However, the MAC CE (such as the MAC PDU including the MAC CE) is correctly received by a network device only when it is retransmitted (such as the first time of retransmission, time T4). As this period of time passes, actual delay information has changed (for example, the remaining time has decreased). If the network device allocates subsequent uplink (UL) resources according to the delay information reported in the MAC CE, the UL resources may possibly not satisfy requirements on latency of services.

### Embodiment of a first aspect

The embodiment of this disclosure provides an information processing method, applicable to a terminal equipment side.

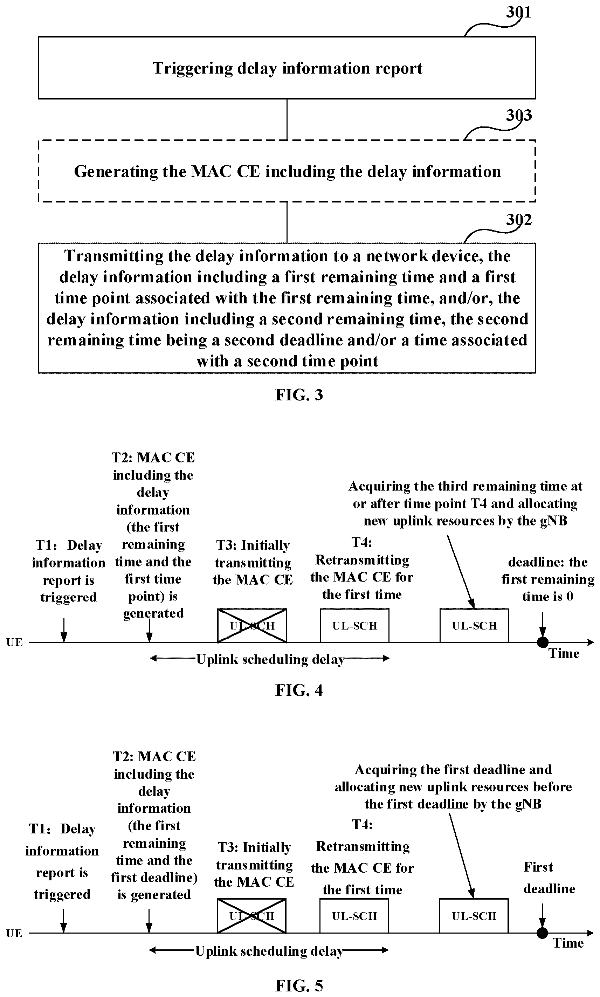

FIG. 3 is a schematic diagram of the information processing method of the embodiment of this disclosure. As shown in FIG. 3, the method includes:
301: triggering delay information report by the terminal equipment; and
302: transmitting the delay information by the terminal equipment to a network device, the delay information including a first remaining time and a first time point associated with the first remaining time, and/or, the delay information including a second remaining time, the second remaining time being a second deadline and/or a time associated with a second time point.

In the above embodiment, the delay information includes the first remaining time and the first time point associated with the first remaining time, and/or, the delay information includes the second remaining time, the second remaining time being a second deadline and/or a time associated with a second time point. Therefore, the network device is able to accurately determine delay information of services, which is helpful to allocating uplink resources satisfying requirements on service delay by the network device, and is beneficial to ensure QoS of the services.

In the above embodiment, the second remaining time being a second deadline and/or a time associated with a second time point may be replaced with that the second remaining time indicates a second deadline and/or a time associated with a second time point.

It should be noted that FIG. 3 only schematically illustrates the embodiment of this disclosure; however, this disclosure is not limited thereto. For example, an order of execution of the operations may be appropriately adjusted, and furthermore, some other operations may be added, or some operation therein may be reduced. And appropriate variants may be made by those skilled in the art according to the above contents, without being limited to what is contained in FIG. 3.

In some embodiments, the delay information may be information associated with data volume information of the data to be transmitted.

In some embodiments, the data to be transmitted may be a protocol data unit (PDU) set or buffered data in a logical channel group or logical channel, and/or the data to be transmitted may be data buffered by a packet data convergence protocol (PDCP) entity and/or data buffered by a radio link control (RLC) entity. However, this disclosure is not limited thereto, and the data to be transmitted may also be other data.

In some embodiments, the data volume may be a data volume buffered in a PDU set or a logical channel group or a logical channel, and/or the data volume may be a sum of a data volume buffered by a PDCP entity and a data volume buffered by an RLC entity, such as a sum of a data volume buffered by a PDCP entity corresponding to at least one PDU set or logical channel group or logical channel and a data volume buffered by an RLC entity.

In some embodiments, the delay information and the data volume information of the data to be transmitted may be included in the same MAC CE. Thus, an association between the delay information and the data to be transmitted may be denoted in a simple manner.

For example, the delay information and the data volume information of the data to be transmitted may be included in a BSR MAC CE. The delay information report may be a buffer status report (BSR), which may be a long BSR or a short BSR or a long truncated BSR or a short truncated BSR or an extended long BSR or an extended short BSR or a new long BSR or a new short BSR, which is not limited in this disclosure. In a case where the delay information report uses a BSR, "a delay information report" may be replaced with "a BSR", and "triggering of delay information" or "delay information report is triggered" or similar expressions may be replaced with "at least one BSR is triggered (and is not cancelled)", "cancellation of delay information" or "delay information report is cancelled" or similar expressions may be replaced with "cancellation of BSR", and "generation of an MAC CE including delay information report" or similar expressions may be replaced with "generation of a BSR MAC CE". In addition, a BSR process may also be used for a process related to delay information.

However, this disclosure is not limited thereto, and the delay information and the data volume information of the data to be transmitted may also be included in an MAC CE different from the BSR MAC CE; or, the data volume information of the data to be transmitted is included in a first MAC CE, and the delay information is included in a second MAC CE, wherein the first MAC CE may be a BSR MAC CE, and the second MAC CE may an MAC CE different from the BSR MAC CE.

In some embodiments, the delay information may include the data volume information of the data to be transmitted. For example, the delay information includes relevant information of the remaining time and the data volume information of the data to be transmitted.

In some embodiments, in a case where the delay information report is a BSR, conditions for triggering the delay information report in 301 may include conditions for triggering the BSR. However, this disclosure is not limited thereto, and the conditions for triggering the delay information report in 301 may also include other conditions. Or, in a case where the delay information report is not a BSR, the conditions for triggering the delay information report in 301 may be conditions different or identical to the conditions for triggering the BSR.

In some embodiments, in the case where the delay information report is a BSR, a mode for transmitting the delay information report in 302 may be identical to a mode of transmitting the BSR. For example, in a process of logical channel prioritization, a priority of the MAC CE including the delay information is a priority of a BSR MAC CE, and the UE allocates uplink resources to the MAC CE including the delay information according to the priority of the BSR MAC CE. Or, in the case where the delay information report is not a BSR, the mode for transmitting the delay information report in 302 may be identical to or different from the mode of transmitting the BSR. Reference may be made to an embodiment of a fourth aspect described later for the priority of the MAC CE including the delay information.

In some embodiments, as shown in FIG. 3, the method may further include:
303: generating an MAC CE including the delay information by the terminal equipment.

For example, in a case where delay information report is triggered, the terminal equipment may generate an MAC CE reporting the delay information and transmit the MAC CE to the network device under a second condition described in an embodiment of a second aspect.

In some embodiments, the delay information may include a first remaining time and a first time point associated with the first remaining time. That is, the UE not only transmits the first remaining time to the network device, but also transmits a time stamp (first time point) associated with the first remaining time. The network device may derive an actual remaining time at a certain time (such as a current time or a time when the network device receives or decodes the delay information report) according to the first remaining time and the time stamp (first time point).

In some embodiments, the first remaining time may be or indicate a time associated with the data volume to be transmitted. For example, the first remaining time may be or indicate a time when the data to be transmitted are transmitted to the network device within the first remaining time. For example, a latency requirement (such as a protocol data unit set delay budget (PSDB), or a protocol data unit delay budget (PDB)) or PSDB (or PDB) minus consumed time, etc.) of the data to be transmitted can be satisfied only when the data to be transmitted are transmitted to the network device within the first remaining time.

In some embodiments, the delay information may include a second remaining time. That is, the UE transmits the second remaining time to the network device without additionally transmitting a time stamp associated with the second remaining time to the network device. The network device derives an actual remaining time at a certain time (such as a current time or a time when the network device receives or decodes the delay information report) according to the second remaining time.

In some embodiments, the second remaining time may be or indicate a time associated with the data volume to be transmitted. For example, the second remaining time may be the following time that: the data to be transmitted are transmitted to the network device in a case where the second remaining time is a time associated with the second time point; or, the data to be transmitted are transmitted to the network device before the second remaining time in a case where the second remaining time is a second deadline. Thus, the latency requirements of the data to be transmitted (such as PSDB, PDB, or remaining PSDB or remaining PDB, etc.) may be satisfied.

In some embodiments, the first remaining time and/or the second remaining time may correspond to a time when the data to be transmitted are transmitted to the network device (e.g. the data to be transmitted are correctly received by the network device). However, this disclosure is not limited thereto, and the first remaining time and/or the second remaining time may also correspond to a time when the data to be transmitted are transmitted to a core network, etc. For example, the data to be transmitted are transmitted to the network device and transmitted to the core network within the first remaining time and/or the second remaining time, so as to satisfy the latency requirement of the data to be transmitted; or, the data to be transmitted may be transmitted to the network device before the second remaining time and are transmitted to the core network, so as to satisfy the latency requirement of the data to be transmitted.

In some embodiments, the delay information may include one or more first remaining times or second remaining times. For example, the delay information may include one or more first remaining times or second remaining times associated with the data to be transmitted or the data volume.

In some embodiments, when the delay information includes more than one first remaining times, the more than one first remaining times may be associated with one or more first time points. In other words, in the delay information, the number of first time points may be less than or equal to the number of first remaining times.

In the embodiment of this disclosure, 'a remaining time' is a term used for ease of understanding, and is not intended to limit this disclosure. In some embodiments, "a first remaining time" and "a second remaining time "may be replaced with "a first time" and "a second time", or may be replaced with "a first duration" or "a second duration", etc. The unit of the time or duration may be an absolute time, or may be a relative time, such as millisecond, slot, symbol, etc.

The first remaining time shall be exemplified below.

In some embodiments, the first remaining time may be or indicate a time associated with the first time point. For example, the first remaining time may be a time derived based on the first time point. For example, the first remaining time is a time calculated by taking the first time point as reference, i.e. a remaining time at the first time point. However, this disclosure is not limited thereto, and the first remaining time may also be associated with the first time point by other means, for example, the first remaining time may be a time derived based on a time point before or after the first time point, etc.

FIG. 4 is a schematic diagram of a flow related to the delay information of the embodiment of this disclosure. In some embodiments, as shown in FIG. 4, the first time point may include at least one of the following: a time point at which the delay information report is triggered (e.g. T1), a time point at which the MAC CE including the delay information is generated (e.g. T2), a time point at which the MAC CE including the delay information is transmitted (e.g. T3, T4), other time points, or the first deadline.

Wherein, the time point at which the MAC CE including the delay information is transmitted may be a time point T3 of new transmission (new transmission or initial transmission), such as a first system frame number (SFN) and/or a first symbol and/or a first slot of uplink resources for new transmission, or a last SFN and/or a last symbol and/or a last slot of uplink resources for new transmission, and another time point may be a time point between the time point T1 at which the delay information report is triggered and the time point T3 at which the MAC CE including the delay information is transmitted.

In the flow shown in FIG. 4, the UE initially transmits the MAC CE including the delay information to the network device at time point T3, wherein the delay information includes the first time point and the first remaining time derived based on the first time point, and the network device does not correctly receive the initially-transmitted MAC CE; the UE retransmits the MAC CE to the network device at time T4 for the first time, and the network device successfully receives the MAC CE retransmitted for the first time, and the network device may derive an actual remaining time (i.e. a third remaining time) at a certain moment according to the first remaining time and the first time point included in the MAC CE, and allocate uplink resources to the UE according to the third remaining time, so that the UE transmits the data to be transmitted to the network device before the first remaining time is 0. Wherein, the certain moment is, for example, time point T4 or a time point after time point T4, such as a current time point, etc.

FIG. 5 is another schematic diagram of the flow related to delay information of the embodiment of this disclosure, showing the case where the first time point is the first deadline. In some embodiments, as shown in FIG. 5, the first deadline may include at least one of the following: a time point when the first remaining time is 0 (e.g. deadline), a time point when a time period or a timer expires, or a time point when a PSDB or a remaining PSDB or a PDB or a remaining PDB is 0.

In some embodiments, the time period or timer may be configured by the network or is predefined, such as being configured by the network device via an RRC message (such as RRC reconfiguration or RRC resume or RRC setup or RRC re-establishment). For example, a length of the time period or timer may be less than or equal to a historical average of the first remaining time, or may be less than or equal to a historical minimum value of the first remaining time, etc.

In some embodiments, a starting point of the time period may be the time point at which the delay information report is triggered, or the time point at which the MAC CE including the delay information is generated, or the time point at which the MAC CE including the delay information is transmitted; or, the timer may be started at the time point at which the delay information report is triggered, or the time point at which the MAC CE including the delay information is generated, or the time point at which the MAC CE including the delay information is transmitted.

In some embodiments, as shown in FIG. 5, in the case where the delay information includes the first deadline, the network device (e.g. gNB) may allocate new uplink resources before the first deadline according to the first deadline, so that the UE may transmit the data to be transmitted via the uplink resources to the network device before the first deadline.

In some embodiments, the first time point may be denoted in various manners. For example, the first time point may be denoted by an SFN and/or a slot and/or a symbol, and/or, it may be denoted by an absolute time, such as hour, minute, second, millisecond, a UTC (universal time coordinated) time, or a GPS (global positioning system) time.

In some embodiments, the first time point may also be denoted by an offset relative to a third time point, wherein the third time point corresponds to, for example, an uplink resource or a time when a PDCCH is received.

For example, the first time point may be a time relative to a UL-SCH (uplink sharing channel) resource configured by the network device. Wherein, the UL-SCH resource is, for example, a UL-SCH resource used for new transmission or initial transmission, and the first time point is, for example, a time of a first symbol or a first slot or a first SFN or a last symbol or a last slot or a last SFN relative to the UL-SCH resource configured by the network device.

Or, the first time point may be a time relative to receiving a PDCCH (physical downlink control channel) by the UE, such as an SFN and/or a slot and/or a symbol of a resource of the PDCCH. Wherein, the PDCCH is, for example, a PDCCH scheduling uplink transmission (UL transmission).

In some embodiments, the first time point may be denoted by, for example, the number of milliseconds, the number of microseconds, the number of frames, the number of subframes, the number of slots, or the number of OFDM (orthogonal frequency division multiplexing) symbols, etc.

The second remaining time shall be exemplified below.

In some embodiments, the second remaining time may be or indicate a time associated with the second time point. For example, the second remaining time may be a time derived based on the second time point. For example, the second remaining time is a time derived through calculation by taking the second time point as a reference, that is, a remaining time at the second time point. However, this disclosure is not limited thereto, and the second remaining time may also be associated with the second time point in other manners, for example, the second remaining time is a time derived based on a time point before or after the second time point, etc.

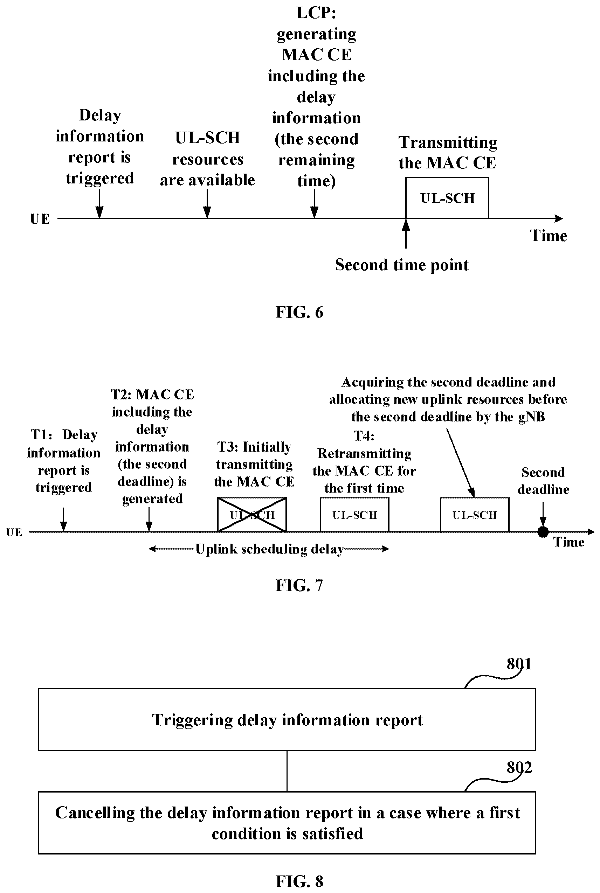

In some embodiments, the second time point may be configured by the network or is preset, such as being configured by the network device via an RRC message (such as RRC reconfiguration or RRC resume or RRC setup or RRC reestablishment), that is, the second time point may be a time point known to both the network device and the terminal equipment. FIG. 6 is a further schematic diagram of the flow related to delay information of the embodiment of this disclosure. As shown in FIG. 6, the second time point may be a time point at which the MAC CE including the delay information is transmitted. Wherein, the time point at which the MAC CE including the delay information is transmitted may be a time point of new transmission, such as a first SFN and/or a first symbol and/or a first slot of uplink resources used for new transmission, or a last SFN and/or a last symbol and/or a last slot of uplink resources used for new transmission.

In the case where the second remaining time is a time derived through calculation by taking the time point of the new transmission (new transmission or initial transmission) as a reference, if the network device correctly receives the initial transmission or new transmission of the MAC CE, a remaining time at a certain time may be determined according to the time point of the initial transmission or new transmission and the second remaining time included in the MAC CE.

If the network device correctly receives the retransmission of the MAC CE, the network device may determine a resource where initial transmission or new transmission of an HARQ (hybrid automatic repeat request) process associated with the retransmission is located according to the number of times of transmission of the HARQ process (such as according to an HARQ process ID and/or a redundancy version (RV)), and determine a remaining time at a certain time according to the time point of the initial transmission or new transmission and the second remaining time included in the MAC CE.

Thus, it is helpful to the network device in allocating uplink resources to the UE according to the remaining time, so that the UE transmits the data to be transmitted to the network device before the second remaining time is 0.

In some embodiments, the second remaining time may also be or indicate a second deadline. FIG. 7 is still another schematic diagram of the flow related to delay information of the embodiment of this disclosure. In some embodiments, as shown in FIG. 7, the second deadline may include at least one of the following: a time point at which a time period or a timer expires; a time point at which a PSDB or a remaining PSDB or a PDB or a remaining PDB is 0; and a deadline of data transmission determined by the terminal equipment according to implementation.

In some embodiments, the time period or timer may be configured by the network or is predefined, such as being configured by the network device via an RRC message (such as RRC reconfiguration or RRC resume or RRC setup or RRC re-establishment). For example, a length of the time period or timer may be set to be that the time period ends or the timer expires at or before a time point when a PSDB or a remaining PSDB or a PDB or a remaining PDB is 0.

In some embodiments, a starting point of the time period may be the time point at which the delay information report is triggered, or the time point at which the MAC CE including the delay information is generated, or the time point at which the MAC CE including the delay information is transmitted; or, the timer may be started at the time point at which the delay information report is triggered, or the time point at which the MAC CE including the delay information is generated, or the time point at which the MAC CE including the delay information is transmitted.

In some embodiments, as shown in FIG. 7, in the case where the second remaining time is the second deadline, the network device (e.g. gNB) may allocate new uplink resources before the second deadline according to the second deadline, so that the UE may transmit the data to be transmitted via the uplink resources to the network device before the second deadline.

In some embodiments, the second deadline may be denoted in various manners. For example, the second deadline may be denoted by an SFN and/or a slot and/or a symbol and/or an absolute time. For example, the second deadline is denoted by an absolute time, such as hour, minute, second, millisecond, a UTC time, or a GPS time, etc.

In some embodiments, the second deadline may also be denoted by an offset relative to a fourth time point, wherein the fourth time point corresponds to, for example, a time of an uplink resource or receiving a PDCCH.

For example, the second deadline may be a time relative to a UL-SCH (uplink sharing channel) resource configured by the network device. Wherein, the UL-SCH resource is, for example, a UL-SCH resource used for new transmission or initial transmission, and the second deadline is, for example, a time of a first symbol or a first slot or a first SFN or a last symbol or a last slot or a last SFN relative to the UL-SCH resource configured by the network device.

Or, the second deadline may be a time relative to receiving a PDCCH (physical downlink control channel) by the UE, wherein, the PDCCH is, for example, a PDCCH scheduling uplink transmission (UL transmission).

In some embodiments, the second deadline may be denoted by, for example, the number of milliseconds, the number of microseconds, the number of frames, the number of subframes, the number of slots, or the number of OFDM (orthogonal frequency division multiplexing) symbols, etc.

The above implementations only illustrate the embodiment of this disclosure. However, this disclosure is not limited thereto, and appropriate variants may be made on the basis of these implementations. For example, the above implementations may be executed separately, or one or more of them may be executed in a combined manner.

It can be seen from the above embodiment that the delay information includes a first remaining time and a first time point associated with the first remaining time, and/or, the delay information includes a second remaining time, the second remaining time being a second deadline and/or a time associated with a second time point. Hence, a network device is able to accurately determine delay information of services, which is helpful to allocating uplink resources satisfying requirements on service delay by the network device, and is beneficial to ensure QoS of the services.

### Embodiment of a second aspect

The embodiment of this disclosure provides an information processing method, applicable to a terminal equipment side. Contents in this embodiment identical to those in the embodiment of the first aspect shall not be repeated herein any further. The embodiment of the second may be implemented separately, or, the embodiment of the second may be implemented in combination with the embodiment of the first aspect.

FIG. 8 is a schematic diagram of the information processing method of the embodiment of this disclosure. As shown in FIG. 8, the method includes:
801: triggering delay information report by the terminal equipment; and
802: cancelling the delay information report by the terminal equipment in a case where a first condition is satisfied.

After the delay information report is triggered, if it is not cancelled, the UE will continue to transmit the delay information report by using uplink resources, thereby resulting in occupation of network resources. Moreover, if the delay information report is not cancelled, expired delay information is of little use to the network device and is prone to cause waste of network resources. Therefore, according to the above embodiment, canceling triggered delay information report in case of satisfying conditions may lower resource overhead occupied by transmitting the delay information report and avoid the network from allocating radio resources for expired delay information.

In some embodiments, 801 may be identical to 301 in the embodiment of the first aspect, the contents thereof being incorporated herein, which shall not be repeated herein any further.

In some embodiments, in 802, the first condition may be at least one of the following that: an uplink resource used for new transmission is later than a fifth time point; when an MAC CE including the delay information is generated or transmitted, a remaining time is 0 or below a first threshold; when timer 1 expires, the MAC CE including the delay information has not been generated or transmitted, or there is still no available uplink resource for transmitting MAC CE; an uplink resource (or UL grant) is able to accommodate all data to be transmitted, and is not able to additionally accommodate the MAC CE including the delay information and its header; and an MAC PDU is transmitted and includes the delay information.

In some embodiments, the fifth time point may be preconfigured (predefined), for example, the fifth time point may be a time point when a remaining time will be 0. Or, the fifth time point may be configured by the network, for example, the network device configures via an RRC message (such as RRC reconfiguration or RRC resume or RRC setup or RRC reestablishment).

In a case where the uplink resource used for new transmission is later than the fifth time point (for example, a first symbol or a first slot or a starting SFN or a last symbol or a last slot or an ending SFN of the uplink resource is later than the fifth time point), the MAC CE including the delay information may only be transmitted after the fifth time point. As the MAC CE is transmitted too late, even if the network device receives the delay information, it has no time to allocate suitable uplink resources for the UE to transmit the data to be transmitted, hence, report of the triggered delay information is cancelled.

In some embodiments, the first threshold may be preconfigured (pre-defined) or is configured by the network, for example, the network device configures via an RRC message (such as RRC reconfiguration or RRC resume or RRC setup or RRC reestablishment).

The UE may determine the remaining time when the MAC CE including the delay information is generated, or determine the uplink resource that may be used to transmit the MAC CE including the delay information, and determine a remaining time at the uplink resource. In the case where the remaining time is 0 or below the first threshold, even if the MAC CE including the delay information is transmitted to the network device, the delay information has already expired or is about to expire. Therefore, report of the triggered delay information is canceled.

In some embodiments, timer 1 is preconfigured (pre-defined) or is configured by the network, for example, the network device configures via an RRC message (such as RRC reconfiguration or RRC resume or RRC setup or RRC reestablishment).

When timer 1 expires, the UE has not yet generated or transmitted the MAC CE including the delay information, or there is still no available uplink resource for transmitting MAC CE, in which case the MAC CE is generated or transmitted too late, hence, report of the triggered delay information is canceled.

In some embodiments, in a case where an uplink resource (or UL grant) is able to accommodate all data to be transmitted and is not able to additionally accommodate the MAC CE including the delay information and its header, the data to be transmitted may be transmitted to the network device via the uplink resource (or UL grant). Therefore, the UE does not need to report the delay information to the network device, and cancels the report of the triggered delay information.

In some embodiments, that the MAC PDU includes the delay information may include that: the MAC PDU includes the MAC CE of the delay information and its subheader. When the MAC PDU is transmitted, the delay information is transmitted to the network device, hence, the triggered delay information report may be canceled. Wherein, the MAC CE may include all delay information to be reported or may include delay information of a latest event triggering delay information report.

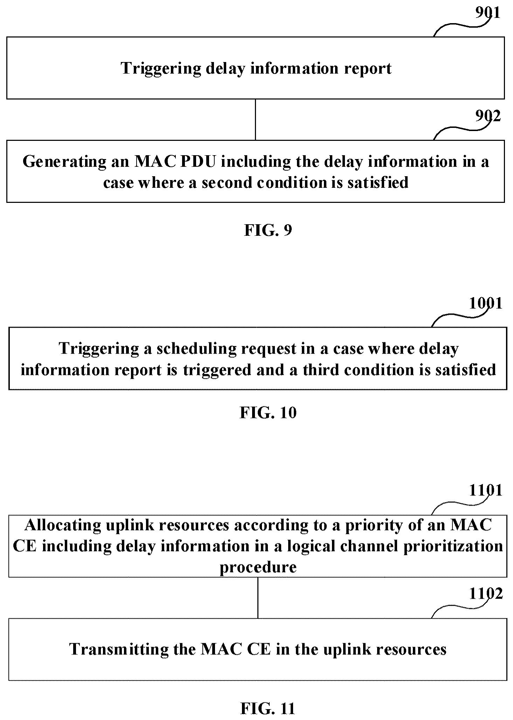

FIG. 9 is another schematic diagram of the information processing method of the embodiment of this disclosure. As shown in FIG. 9, the method includes:
901: triggering delay information report by the terminal equipment; and
902: generating an MAC PDU including the delay information by the terminal equipment in a case where a second condition is satisfied.

After the delay information report is triggered, if the UL-SCH resources that the UE may derive are too late, even if the UE generates the MAC CE including the delay information, the delay information will not be of much use to the network device if the MAC CE is received by the network beyond a delay requirement of services (e.g. XR services). Therefore, according to the above embodiment, the MAC CE including the delay information is generated in the case where the second condition is satisfied, which may avoid generating report of expired delay information, and reduce waste of radio resources.

In some embodiments, 901 may be identical to 301 in the embodiment of the first aspect, the contents of which being incorporated herein, which shall not be repeated herein any further.

In some embodiments, in 902, the second condition may include that: the delay information report is triggered, the uplink resource may be used for new transmission and the uplink resource may accommodate the MAC CE including the delay information and its subheader, and the uplink resource satisfies at least one of the following that:
the uplink resource is earlier than a sixth time point; the uplink resource is within a remaining time (before a remaining time is 0 or less than a second threshold); the uplink resource is before timer 2 expires; a physical uplink shared channel (PUSCH) duration of the uplink resource is less than the first threshold; and a subcarrier spacing (SCS) (or its index) of the uplink resource is included in a subcarrier spacing (or its index) set configured for a PDU set or a logical channel group or a logical channel that triggers delay information report.

In some embodiments, the remaining time mentioned may be the first remaining time or the second remaining time in the embodiment of the first aspect.

As shown in FIG. 6, the UE may trigger delay information report, determine whether UL-SCH resources are available, if the UL-SCH resources are available, execute a logical channel prioritization (LCP) procedure, in a case where a result of the LCP is that the uplink resources may accommodate the MAC CE including the delay information plus its subheader, further determine whether the uplink resources satisfy the above conditions, in a case where the above conditions are satisfied, generate the MAC CE including the delay information, and transmits the MAC CE in the uplink resources.

In some embodiments, the second condition may be as shown in the following table:

| | | | |
|---|---|---|---|
| The MAC entity shall: | | | |
| | 1> if at least one delay information report / BSR has been triggered and not cancelled: | | |
| | | 2> if UL-SCH resources are available for a new transmission and the UL-SCH resources can accommodate the delay information report/BSR MAC CE plus its subheader as a result of logical channel prioritization, and the UL-SCH resources are within the remaining time included in the delay information: | |
| | | | 3>instruct the Multiplexing and Assembly procedure to generate the delay information report/BSR MAC CE(s) as defined in clause 6.1.3.1; |
| ... | | | |

In some embodiments, the sixth time point may be configured by the network or may be determined by the terminal equipment. For example, the sixth time point is the time point when the remaining time will be 0. For another example, the sixth time point is configured by the network device via an RRC message (such as RRC reconfiguration or RRC resume or RRC setup or RRC reestablishment).

In some embodiments, timer 2 may be preconfigured (pre-defined) or may be configured by the network, such as being configured by the network device via an RRC message (e.g. RRC reconfiguration or RRC resume or RRC setup or RRC reestablishment).

In some embodiments, timer 2 may be started when the delay information report is triggered. However, this disclosure is not limited thereto, and timer 2 may also be started at other times.

In some embodiments, the first threshold may be less than or equal to a PUSCH duration configured for a PDU set or a logical channel group or a logical channel that triggers delay information report.

It should be noted that FIGs. 8 and 9 only schematically illustrate the embodiment of this disclosure; however, this disclosure is not limited thereto. For example, an order of execution of the operations may be appropriately adjusted, and furthermore, some other operations may be added, or some operation therein may be reduced. And appropriate variants may be made by those skilled in the art according to the above contents, without being limited to what is contained in FIGs. 8 and 9.

The above implementations only illustrate the embodiment of this disclosure. However, this disclosure is not limited thereto, and appropriate variants may be made on the basis of these implementations. For example, the above implementations may be executed separately, or one or more of them may be executed in a combined manner.

### Embodiment of a third aspect

The embodiment of this disclosure provides an information processing method, applicable to a terminal equipment side. Contents in this embodiment identical to those in the embodiments of the first and second aspects shall not be repeated herein any further. The embodiment of the third aspect may be implemented separately, or, the embodiment of the third aspect may be implemented in combination with the embodiments of the first and second aspects.

FIG. 10 is a schematic diagram of the information processing method of the embodiment of this disclosure. As shown in FIG. 10, the method includes:
1001: triggering a scheduling request by the terminal equipment in a case where delay information report is triggered and a third condition is satisfied.

After the delay information report is triggered, in a case where the UE has no suitable uplink resources available for new transmission, if the network is not notified of this case, the delay information may report possibly not be able to be transmitted to the network, or a time when the delay information report is transmitted to the network no longer satisfies a delay requirement of the services (such as XR services), thereby resulting in that services are dropped. According to the above embodiment, triggering the SR when the condition is satisfied is beneficial for the network to allocate UL resources earlier to derive the delay information report, and is beneficial for the network to allocate uplink resources satisfying the delay requirement of services, which is advantageous to ensuring QoS of services.

In some embodiments, the third condition may include at least one of the following that: there exists no uplink resource available for new transmission; there exist uplink resources available for new transmission and the uplink resources are unable to accommodate the MAC CE including the delay information and its subheader; there exist uplink resources available for new transmission and the uplink resources are later than a seventh time point; the remaining time at a time corresponding to an uplink resource is 0 or less than a third threshold; timer 3 expires at the time corresponding to the uplink resource; a PUSCH duration of uplink resources is equal to or greater than the second threshold; a subcarrier spacing (SCS) (or its index) of uplink resources is not included in a subcarrier spacing (or its index) set configured for a PDU set or a logical channel group or a logical channel that triggers delay information report.

In some embodiments, the seventh time point may be configured by the network or determined by the terminal equipment, such as being configured by the network device via an RRC message (e.g. RRC reconfiguration or RRC resume or RRC setup or RRC reestablishment).

In some embodiments, timer 3 may be preconfigured (predefined) or may be configured by the network, such as being configured by the network device via an RRC message (e.g. RRC reconfiguration or RRC resume or RRC setup or RRC reestablishment).

In some embodiments, timer 3 may be started when the delay information report is triggered. However, this disclosure is not limited thereto, and timer 3 may also be started at other times.

In some embodiments, the second threshold may be greater than or equal to a PUSCH duration configured for a PDU set or a logical channel group or a logical channel that triggers delay information report.

In some embodiments, the scheduling request configuration used for the scheduling request may be configured by the network device. For example, the scheduling request configuration includes a group of PUCCH resources for SR, the PUCCH resources being in different BWPs (bandwidth parts) and/or different cells. The scheduling request configuration may be included in an RRC (radio resource control) message (e.g. RRC reconfiguration or RRC resume or RRC setup or RRC reestablishment). The scheduling request configuration may be at least one of the following: a scheduling request configuration configured for delay information report; a scheduling request configuration to which a logical channel triggering BSR corresponds; and a scheduling request configuration configured for other control information.

In some embodiments, the other control information may include at least one of the following: secondary cell (SCell) beam failure recovery, consistent listen-before-talk (LBT) failure recovery, beam failure recovery of a beam failure detection reference signal (BFD-RS) set, and a positioning measurement gap activation/deactivation request.

It should be noted that FIG. 10 only schematically illustrates the embodiment of this disclosure; however, this disclosure is not limited thereto. For example, an order of execution of the operations may be appropriately adjusted, and furthermore, some other operations may be added, or some operation therein may be reduced. And appropriate variants may be made by those skilled in the art according to the above contents, without being limited to what is contained in FIG. 10.

The above implementations only illustrate the embodiment of this disclosure. However, this disclosure is not limited thereto, and appropriate variants may be made on the basis of these implementations. For example, the above implementations may be executed separately, or one or more of them may be executed in a combined manner.

### Embodiment of a fourth aspect

The embodiment of this disclosure provides an information processing method, applicable to a terminal equipment side. Contents in this embodiment identical to those in the embodiments of the first, second and third aspects shall not be repeated herein any further. The embodiment of the fourth may be implemented separately, or, the embodiment of the fourth aspect may be implemented in combination with one or more of the embodiments of the first, second and third aspects.

FIG. 11 is a schematic diagram of the information processing method of the embodiment of this disclosure. As shown in FIG. 11, the method includes:
1101: allocating uplink resources by the terminal equipment according to a priority of an MAC CE including delay information in a logical channel prioritization procedure; and
1102: transmitting the MAC CE in the uplink resources by a remote terminal.

In the above embodiment, in step 1101, in a case where the MAC CE including delay information is a BSR MAC CE, the priority of the MAC CE including delay information is a priority of a BSR MAC CE, and in a case where the priority of the MAC CE including delay information is different from the priority of the BSR MAC CE, the priority of the MAC CE may be set.

For example, the priority of the MAC CE may satisfy at least one of the following that:
is higher than an MAC CE for a (extended) BSR or an MAC CE for an SL-BSR prioritized;
is higher than an MAC CE for timing advance report;
is higher than an MAC CE for (enhanced) single entry PHR or an MAC CE for (enhanced) multiple entry PHR;
is lower than an MAC CE for C-RNTI or data from a UL-CCCCH;
is lower than an MAC CE for (enhanced) BFR or an MAC CE for configured grant confirmation or an MAC CE for multiple entry configured grant confirmation;
is lower than an MAC CE for sidelink configured grant confirmation;
is lower than an MAC CE for LBT failure; and
is lower than an MAC CE for a (extended) BSR or an MAC CE for an SL-BSR prioritized.

Setting the priority of the MAC CE including the delay information in allocating resources in the logical channel prioritization procedure as such is beneficial for the MAC CE to be transmitted to the network side as early as possible, thereby facilitating the network to allocate earlier uplink resources to transmit service data (such as XR service data), and ensuring QoS of services (such as XR services).

In some embodiments, the priority of the MAC CE including the delay information may be as shown in a table below:

| | |
|---|---|
| Logical channels shall be prioritised in accordance with the following order (highest priority listed first): | |
| | - MAC CE for C-RNTI, or data from UL-CCCH; |
| | - MAC CE for (Enhanced) BFR, or MAC CE for Configured Grant Confirmation, or MAC CE for Multiple Entry Configured Grant Confirmation; |
| | - MAC CE for Sidelink Configured Grant Confirmation; |
| | - MAC CE for LBT failure; |
| | - MAC CE for Timing Advance Report; |
| | - **MAC CE for Delay Information Report:** |
| | - MAC CE for SL-BSR prioritized according to clause 5.22.1.6; |
| | - MAC CE for (Extended) BSR, with exception of BSR included for padding; |
| | - MAC CE for (Enhanced) Single Entry PHR, or MAC CE for (Enhanced) Multiple Entry PHR; |
| | - MAC CE for Positioning Measurement Gap Activation/Deactivation Request; |
| | - MAC CE for the number of Desired Guard Symbols; |
| | - MAC CE for Case-6 Timing Request; |
| | - MAC CE for (Extended) Pre-emptive BSR; |
| | - MAC CE for SL-BSR, with exception of SL-BSR prioritized according to clause 5.22.1.6 and SL-BSR included for padding; |
| | - MAC CE for IAB-MT Recommended Beam Indication, or MAC CE for Desired IAB-MT PSD range, or MAC CE for Desired DL Tx Power Adjustment; |
| | - data from any Logical Channel, except data from UL-CCCH; |
| | - MAC CE for Recommended bit rate query; |
| | - MAC CE for BSR included for padding; |
| | - MAC CE for SL-BSR included for padding. |
| | NOTE 2: Prioritization among MAC CEs of same priority is up to UE implementation. |

It should be noted that FIG. 11 only schematically illustrates the embodiment of this disclosure; however, this disclosure is not limited thereto. For example, an order of execution of the operations may be appropriately adjusted, and furthermore, some other operations may be added, or some operation therein may be reduced. And appropriate variants may be made by those skilled in the art according to the above contents, without being limited to what is contained in FIG. 11.

The above implementations only illustrate the embodiment of this disclosure. However, this disclosure is not limited thereto, and appropriate variants may be made on the basis of these implementations. For example, the above implementations may be executed separately, or one or more of them may be executed in a combined manner.

### Embodiment of a fifth aspect

The embodiment of this disclosure provides an information processing method, applicable to a network device side. Contents in this embodiment identical to those in the embodiments of the first to the fourth aspects shall not be repeated herein any further.

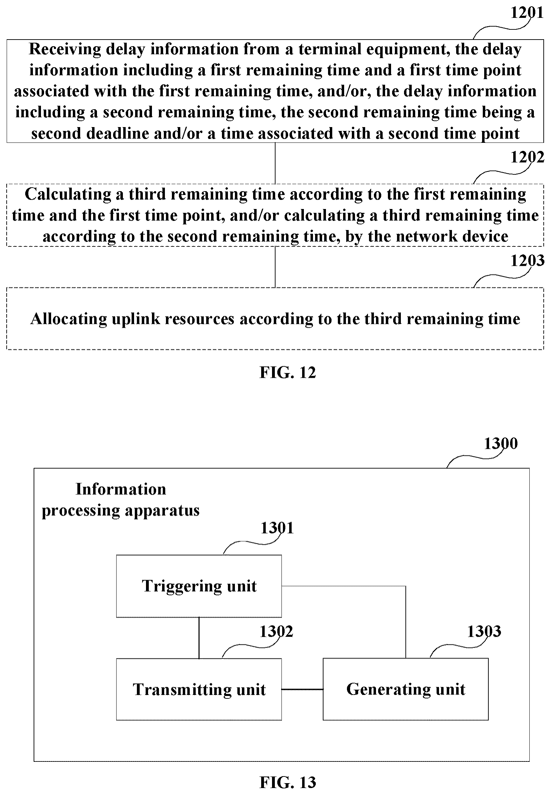

FIG. 12 is a schematic diagram of the information processing method of the embodiment of this disclosure. As shown in FIG. 12, the method includes:
1201: receiving delay information by the network device from a terminal equipment, the delay information including a first remaining time and a first time point associated with the first remaining time, and/or, the delay information including a second remaining time, the second remaining time being a second deadline and/or a time associated with a second time point.

It should be noted that FIG. 12 only schematically illustrates the embodiment of this disclosure; however, this disclosure is not limited thereto. For example, an order of execution of the operations may be appropriately adjusted, and furthermore, some other operations may be added, or some operation therein may be reduced. And appropriate variants may be made by those skilled in the art according to the above contents, without being limited to what is contained in FIG. 12.

In some embodiments, the delay information report is a buffer status report.

In some embodiments, the delay information is information associated with a data volume of data to be transmitted, and/or the first remaining time and/or the second remaining time is/are or indicate(s) a time associated with the data volume of the data to be transmitted.

In some embodiments, the data to be transmitted are a PDU set or buffered data in a logical channel group or logical channel, and/or the data to be transmitted are data buffered by a PDCP entity and/or data buffered by an RLC entity.

In some embodiments, the data volume may be a data volume buffered in a PDU set or a logical channel group or a logical channel, and/or the data volume may be a sum of a data volume buffered by a PDCP entity and a data volume buffered by an RLC entity.

In some embodiments, the delay information may include one or more first remaining times or second remaining times. For example, the delay information may include one or more first remaining times or second remaining times associated with the data to be transmitted or the data volume.

In some embodiments, when the delay information includes more than one first remaining times, the more than one first remaining times may be associated with one or more first time points.

In some embodiments, the first remaining time and/or the second remaining time is/are the following times that: the data to be transmitted are transmitted to the network device within the first remaining time and/or the second remaining time; or, the data to be transmitted are transmitted to the network device before the second remaining time.

In some embodiments, the first remaining time is or indicates a time derived according to the first time point.

In some embodiments, the first time point includes at least one of the following: a time point at which the delay information report is triggered; a time point at which the MAC CE including the delay information is generated; a time point at which the MAC CE including the delay information is transmitted; another time point; or the first deadline.

In some embodiments, the time point at which the MAC CE including the delay information is transmitted includes a first system frame number (SFN) and/or a first symbol and/or a first slot of uplink resources for new transmission, or a last SFN and/or a last symbol and/or a last slot of uplink resources for new transmission.

In some embodiments, the other time point may be a time point between the time point at which the delay information report is triggered and the time point at which the MAC CE including the delay information is transmitted.

In some embodiments, the first deadline may include at least one of the following: a time point when the first remaining time is 0; a time point when a time period or a timer expires; and a time point when a PSDB or a remaining PSDB or a PDB or a remaining PDB is 0.

In some embodiments, the time period or the timer is configured by the network or is predefined.

In some embodiments, a starting point of the time period may be the time point at which the delay information report is triggered, or the time point at which the MAC CE including the delay information is generated, or the time point at which the MAC CE including the delay information is transmitted; or, the timer may be started at the time point at which the delay information report is triggered, or the time point at which the MAC CE including the delay information is generated, or the time point at which the MAC CE including the delay information is transmitted.

In some embodiments, the first time point may be denoted by an SFN and/or a slot and/or a symbol, or, the first time point may be denoted by an offset relative to a third time point.

In some embodiments, the third time point corresponds to an uplink resource or a time when a PDCCH is received.

In some embodiments, the second remaining time is or indicates a time derived according to the second time point.

In some embodiments, the second time point is configured by the network or is preset.

In some embodiments, the second time point includes the time point at which the MAC CE including the delay information is transmitted.

In some embodiments, the time point at which the MAC CE including the delay information is transmitted includes a first SFN and/or a first symbol and/or a first slot of uplink resources used for new transmission, or a last SFN and/or a last symbol and/or a last slot of uplink resources used for new transmission.

In some embodiments, the second deadline includes at least one of the following: a time point at which a time period or a timer expires; a time point at which a PSDB or a remaining PSDB or a PDB or a remaining PDB is 0; and a deadline of data transmission determined by the terminal equipment according to implementation.

In some embodiments, the time period or the timer is configured by the network or is predefined.

In some embodiments, a starting point of the time period may be the time point at which the delay information report is triggered, or the time point at which the MAC CE including the delay information is generated, or the time point at which the MAC CE including the delay information is transmitted; or, the timer may be started at the time point at which the delay information report is triggered, or the time point at which the MAC CE including the delay information is generated, or the time point at which the MAC CE including the delay information is transmitted.

In some embodiments, the second deadline is denoted by an SFN and/or a slot and/or a symbol and/or an absolute time, or, the second deadline is denoted by an offset relative to a fourth time point

In some embodiments, the fourth time point corresponds to, for example, a time of an uplink resource or receiving a PDCCH.

In some embodiments, the delay information and the data volume information are included in the same MAC CE.

In some embodiments, the MAC CE including the delay information is a BSR MAC CE, or the MAC CE is an MAC CE different from a BSR MAC CE.

In some embodiments, the delay information may include information of the data volume of the data to be transmitted. For example, the delay information includes relevant information of the remaining time and information of the data volume of the data to be transmitted.

In some embodiments, the method may further include:
1202: calculating a third remaining time according to the first remaining time and the first time point, and/or calculating a third remaining time according to the second remaining time, by the network device.

For example, when the third remaining time is calculated according to the second remaining time, when the second remaining time is a time associated with the second time point, the third remaining time may be determined according to the second remaining time and the second time point; or, when the second remaining time is the second deadline, the third remaining time may be determined according to the second remaining time.

In some embodiments, the method may further include:
1203: allocating uplink resources by the network device according to the third remaining time.

For example, the network device allocates uplink resources within or before the third remaining time to the UE according to the third remaining time, so that the UE may transmit the data to be transmitted to the network device within or before the third remaining time.

The above implementations only illustrate the embodiment of this disclosure. However, this disclosure is not limited thereto, and appropriate variants may be made on the basis of these implementations. For example, the above implementations may be executed separately, or one or more of them may be executed in a combined manner.

It can be seen from the above embodiment that the delay information includes a first remaining time and a first time point associated with the first remaining time, and/or, the delay information includes a second remaining time, the second remaining time being a second deadline and/or a time associated with a second time point. Hence, a network device is able to accurately determine delay information of services, which is helpful to allocating uplink resources satisfying requirements on service delay by the network device, and is beneficial to ensure QoS of the services.

### Embodiment of a sixth aspect

The embodiment of this disclosure provides an information processing apparatus. The apparatus may be, for example, a terminal equipment, or one or some components or assemblies configured in the terminal equipment. Contents in this embodiment identical to those in the embodiment of the first aspect shall not be described herein any further.

FIG. 13 is a schematic diagram of the information processing apparatus of the embodiment of this disclosure. As shown in FIG. 13, the information processing apparatus 1300 includes:
a triggering unit 1301 configured to trigger delay information report; and
a transmitting unit 1302 configured to transmit the delay information to a network device, the delay information including a first remaining time and a first time point associated with the first remaining time, and/or, the delay information including a second remaining time, the second remaining time being a second deadline and/or a time associated with a second time point.

In some embodiments, the delay information report is a buffer status report.

In some embodiments, the information processing apparatus 1300 may further include: a generating unit 1303 configured to generate an MAC CE including the delay information.

In some embodiments, the delay information is information associated with data volume information of data to be transmitted, and/or the first remaining time and/or the second remaining time is/are a time/times associated with the data volume information of the data to be transmitted.

In some embodiments, the data to be transmitted are data buffered in a PDU set or a logical channel group or a logical channel, and/or, the data to be transmitted are data buffered by a PDCP entity and/or data buffered by an RLC entity.

In some embodiments, the data volume may be a data volume buffered in a PDU set or a logical channel group or a logical channel, and/or the data volume may be a sum of a data volume buffered by a PDCP entity and a data volume buffered by an RLC entity.

In some embodiments, the delay information may include one or more first remaining times or second remaining times. For example, the delay information may include one or more first remaining times or second remaining times associated with the data to be transmitted or the data volume.

In some embodiments, when the delay information includes more than one first remaining times, the more than one first remaining times may be associated with one or more first time points.

In some embodiments, the first remaining time and/or the second remaining time is/are as follows that:
the data to be transmitted are transmitted to the network device within the first remaining time and/or the second remaining time; or,
the data to be transmitted are transmitted to the network device before the second remaining time.

In some embodiments, the first remaining time is or indicates a time derived based on the first time point.

In some embodiments, the first time point may include at least one of the following:
a time point at which the delay information report is triggered;
a time point at which the MAC CE including the delay information is generated;
a time point at which the MAC CE including the delay information is transmitted;
another time point; or
a first deadline.

In some embodiments, the time point at which the MAC CE including the delay information is transmitted includes a first SFN and/or a first symbol and/or a first slot of uplink resources used for new transmission, or a last SFN and/or a last symbol and/or a last slot of uplink resources used for new transmission.

In some embodiments, the other time point may be a time point between the time point at which the delay information report is triggered and the time point at which the MAC CE including the delay information is transmitted.

In some embodiments, the first deadline includes at least one of the following:
a time point when the first remaining time is 0;
a time point when a time period or a timer expires; and
a time point when a PSDB or a remaining PSDB or a PDB or a remaining PDB is 0.

In some embodiments, the time period or the timer is configured by the network or is predefined.

In some embodiments, a starting point of the time period may be the time point at which the delay information report is triggered, or the time point at which the MAC CE including the delay information is generated, or the time point at which the MAC CE including the delay information is transmitted; or, the timer may be started at the time point at which the delay information report is triggered, or the time point at which the MAC CE including the delay information is generated, or the time point at which the MAC CE including the delay information is transmitted.

In some embodiments, the first time point is denoted by an SFN and/or a slot and/or a symbol, or, the first time point may be denoted by an offset relative to a third time point.

In some embodiments, the third time point corresponds to an uplink resource or a time when a PDCCH is received.

In some embodiments, the second remaining time is or indicates a time derived according to the second time point.

In some embodiments, the second time point is configured by the network or is preset.

In some embodiments, the second time point includes the time point at which the MAC CE including the delay information is transmitted.

In some embodiments, the time point at which the MAC CE including the delay information is transmitted includes a first SFN and/or a first symbol and/or a first slot of uplink resources used for new transmission, or a last SFN and/or a last symbol and/or a last slot of uplink resources used for new transmission.

In some embodiments, the second deadline includes at least one of the following:
a time point at which a time period or a timer expires;
a time point at which a PSDB or a remaining PSDB or a PDB or a remaining PDB is 0; and
a deadline of data transmission determined by the terminal equipment according to implementation.

In some embodiments, the time period or the timer is configured by the network or is predefined.

In some embodiments, a starting point of the time period may be the time point at which the delay information report is triggered, or the time point at which the MAC CE including the delay information is generated, or the time point at which the MAC CE including the delay information is transmitted; or, the timer may be started at the time point at which the delay information report is triggered, or the time point at which the MAC CE including the delay information is generated, or the time point at which the MAC CE including the delay information is transmitted.

In some embodiments, the second deadline is denoted by an SFN and/or a slot and/or a symbol and/or an absolute time, or, the second deadline is denoted by an offset relative to a fourth time point

In some embodiments, the fourth time point corresponds to, for example, a time of an uplink resource or receiving a PDCCH.

In some embodiments, the delay information and the data volume information are included in the same MAC CE.

In some embodiments, the MAC CE including the delay information is a BSR MAC CE, or the MAC CE is an MAC CE different from a BSR MAC CE.

In some embodiments, the delay information may include information of the data volume of the data to be transmitted. For example, the delay information includes relevant information of the remaining time and information of the data volume of the data to be transmitted.

The above implementations only illustrate the embodiment of this disclosure. However, this disclosure is not limited thereto, and appropriate variants may be made on the basis of these implementations. For example, the above implementations may be executed separately, or one or more of them may be executed in a combined manner.

It should be noted that the components or modules related to this disclosure are only described above. However, this disclosure is not limited thereto, and the information processing apparatus 1300 may further include other components or modules, and reference may be made to related techniques for particulars of these components or modules.

Furthermore, for the sake of simplicity, connection relationships between the components or modules or signal profiles thereof are only illustrated in FIG. 13. However, it should be understood by those skilled in the art that such related techniques as bus connection, etc., may be adopted. And the above components or modules may be implemented by hardware, such as a processor, a memory, a transmitter, and a receiver, etc., which are not limited in the embodiment of this disclosure.

It can be seen from the above embodiment that the delay information includes a first remaining time and a first time point associated with the first remaining time, and/or, the delay information includes a second remaining time, the second remaining time being a second deadline and/or a time associated with a second time point. Hence, a network device is able to accurately determine delay information of services, which is helpful to allocating uplink resources satisfying requirements on service delay by the network device, and is beneficial to ensure QoS of the services.

### Embodiment of a seventh aspect

The embodiment of this disclosure provides an information processing apparatus. The apparatus may be, for example, a terminal equipment, or one or some components or assemblies configured in the terminal equipment. Contents in this embodiment identical to those in the embodiment of the second aspect shall not be described herein any further.

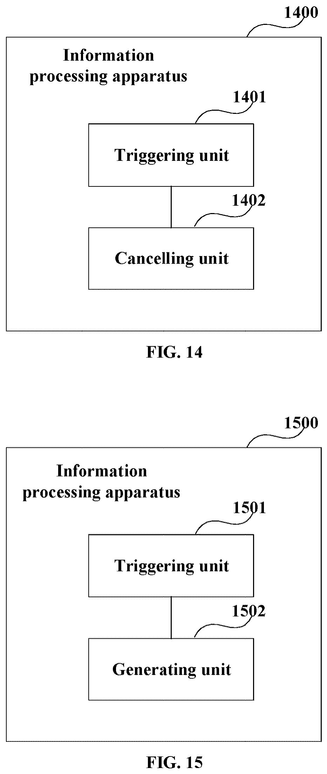

FIG. 14 is a schematic diagram of the information processing apparatus of the embodiment of this disclosure. As shown in FIG. 14, the information processing apparatus 1400 includes:
a triggering unit 1401 configured to trigger delay information report; and
a cancelling unit 1402 configured to cancel the delay information report in a case where a first condition is satisfied.

In some embodiments, the first condition is at least one of the following that:
an uplink resource used for new transmission is later than a fifth time point;
when an MAC CE including the delay information is generated or transmitted, a remaining time is 0 or below a first threshold;
when timer 1 expires, the MAC CE including the delay information has not been generated or transmitted, or there is still no available uplink resource for transmitting MAC CE;
an uplink resource (or UL grant) is able to accommodate all data to be transmitted, and is not able to additionally accommodate the MAC CE including the delay information and its header; and
an MAC PDU is transmitted and includes the delay information.

In some embodiments, the delay information is information associated with data volume information of data to be transmitted, and/or the remaining time is a time associated with the data volume of the data to be transmitted.

In some embodiments, the fifth time point is preconfigured (predefined), or is configured by the network, and/or,
the first threshold is preconfigured (pre-defined) or is configured by the network, and/or,
timer 1 is preconfigured (pre-defined) or is configured by the network, and/or,

In some embodiments, that the MAC PDU includes the delay information includes that:
the MAC PDU includes the MAC CE of the delay information and its subheader, wherein the MAC CE may include all delay information to be reported or includes delay information of a latest event triggering delay information report.

FIG. 15 is another schematic diagram of the information processing apparatus of the embodiment of this disclosure. As shown in FIG. 15, the information processing apparatus 1500 includes:
a triggering unit 1501 configured to trigger delay information report; and
a generating unit 1502 configured to generate an MAC PDU including the delay information in a case where a second condition is satisfied.

In some embodiments, the second condition includes that:
the delay information report is triggered,
the uplink resource may be used for new transmission and the uplink resource may accommodate the MAC CE including the delay information and its subheader, and the uplink resource satisfies at least one of the following that:
   the uplink resource is earlier than a sixth time point;
   the uplink resource is within a remaining time (before a remaining time is 0 or less than a second threshold);
   the uplink resource is before timer 2 expires;
   a physical uplink shared channel (PUSCH) duration of the uplink resource is less than the first threshold; and
   a subcarrier spacing (SCS) (or its index) of the uplink resource is included in a subcarrier spacing (or its index) set configured for a PDU set or a logical channel group or a logical channel that triggers delay information report.

In some embodiments, the sixth time point is configured by the network or is determined by the terminal equipment, and/or,
timer 2 is preconfigured (pre-defined) or is configured by the network, and/or,
the first threshold is less than or equal to a PUSCH duration configured for a PDU set or a logical channel group or a logical channel that triggers delay information report.

In some embodiments, timer 2 is started when the delay information report is triggered.

In some embodiments, the triggering unit 1401 and/or the triggering unit 1501 may be the triggering unit 1301 in the embodiment of the sixth aspect, and the generating unit 1502 may be the generating unit 1303 in the embodiment of the sixth aspect.

The above implementations only illustrate the embodiment of this disclosure. However, this disclosure is not limited thereto, and appropriate variants may be made on the basis of these implementations. For example, the above implementations may be executed separately, or one or more of them may be executed in a combined manner.

It should be noted that the components or modules related to this disclosure are only described above. However, this disclosure is not limited thereto, and the information processing apparatus 1400 and the information processing apparatus 1500 may further include other components or modules, and reference may be made to related techniques for particulars of these components or modules.

Furthermore, for the sake of simplicity, connection relationships between the components or modules or signal profiles thereof are only illustrated in FIGs. 14 and 15. However, it should be understood by those skilled in the art that such related techniques as bus connection, etc., may be adopted. And the above components or modules may be implemented by hardware, such as a processor, a memory, a transmitter, and a receiver, etc., which are not limited in the embodiment of this disclosure.

### Embodiment of an eighth aspect

The embodiment of this disclosure provides an information processing apparatus. The apparatus may be, for example, a terminal equipment, or one or some components or assemblies configured in the terminal equipment. Contents in this embodiment identical to those in the embodiment of the third aspect shall not be described herein any further.

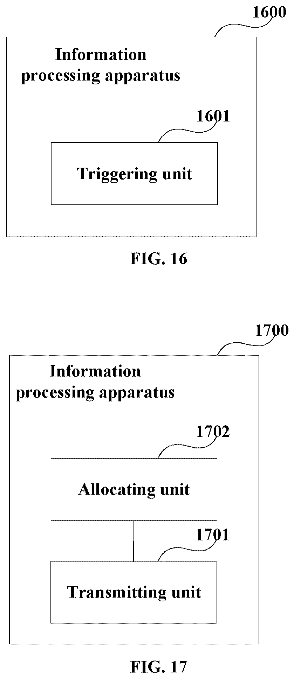

FIG. 16 is a schematic diagram of the information processing apparatus of the embodiment of this disclosure. As shown in FIG. 16, the information processing apparatus 1600 includes:
a triggering unit 1601 configured to trigger a scheduling request in a case where delay information report is triggered and a third condition is satisfied.

In some embodiments, the third condition includes at least one of the following that:
there exists no uplink resource available for new transmission;
there exist uplink resources available for new transmission and the uplink resources are unable to accommodate the MAC CE including the delay information and its subheader;
there exist uplink resources available for new transmission and the uplink resources are later than a seventh time point;
the remaining time at a time corresponding to an uplink resource is 0 or less than a third threshold;
timer 3 expires at the time corresponding to the uplink resource; a PUSCH duration of uplink resources is equal to or greater than the second threshold;
a subcarrier spacing (SCS) (or its index) of uplink resources is not included in a subcarrier spacing (or its index) set configured for a PDU set or a logical channel group or a logical channel that triggers delay information report.

In some embodiments, the seventh time point is configured by the network or determined by the terminal equipment, and/or,
timer 3 is preconfigured (predefined) or is configured by the network, and/or
the second threshold is greater than or equal to a PUSCH duration configured for a PDU set or a logical channel group or a logical channel that triggers delay information report.

In some embodiments, timer 3 is started when the delay information report is triggered.

In some embodiments, the scheduling request configuration used for the scheduling request is configured by the network device.

In some embodiments, the scheduling request configuration is at least one of the following:
a scheduling request configuration configured for delay information report;
a scheduling request configuration to which a logical channel triggering BSR corresponds; and
a scheduling request configuration configured for other control information.

In some embodiments, the triggering unit 1601 may be the triggering unit 1301 in the embodiment of the sixth aspect.

The above implementations only illustrate the embodiment of this disclosure. However, this disclosure is not limited thereto, and appropriate variants may be made on the basis of these implementations. For example, the above implementations may be executed separately, or one or more of them may be executed in a combined manner.

It should be noted that the components or modules related to this disclosure are only described above. However, this disclosure is not limited thereto, and the information processing apparatus 1600 may further include other components or modules, and reference may be made to related techniques for particulars of these components or modules.

Furthermore, for the sake of simplicity, connection relationships between the components or modules or signal profiles thereof are only illustrated in FIG. 16. However, it should be understood by those skilled in the art that such related techniques as bus connection, etc., may be adopted. And the above components or modules may be implemented by hardware, such as a processor, a memory, a transmitter, and a receiver, etc., which are not limited in the embodiment of this disclosure.

### Embodiment of a ninth aspect

The embodiment of this disclosure provides an information processing apparatus. The apparatus may be, for example, a terminal equipment, or one or some components or assemblies configured in the terminal equipment. Contents in this embodiment identical to those in the embodiment of the fourth aspect shall not be described herein any further.

FIG. 17 is a schematic diagram of the information processing apparatus of the embodiment of this disclosure. As shown in FIG. 17, the information processing apparatus 1700 includes:
an allocating unit 1702 configured to allocate uplink resources according to a priority of an MAC CE including delay information in a logical channel prioritization procedure; and
a transmitting unit 1701 configured to transmit the MAC CE in the uplink resources.

In some embodiments, the priority of the MAC CE is at least one of the following that:
is higher than an MAC CE for a (extended) BSR or an MAC CE for an SL-BSR prioritized;
is higher than an MAC CE for timing advance report;
is higher than an MAC CE for (enhanced) single entry PHR or an MAC CE for (enhanced) multiple entry PHR;
is lower than an MAC CE for C-RNTI or data from a UL-CCCCH;
is lower than an MAC CE for (enhanced) BFR or an MAC CE for configured grant confirmation or an MAC CE for multiple entry configured grant confirmation;
is lower than an MAC CE for sidelink configured grant confirmation;
is lower than an MAC CE for LBT failure; and
is lower than an MAC CE for a (extended) BSR or an MAC CE for an SL-BSR prioritized.

In some embodiments, the transmitting unit 1701 may be the transmitting unit 1302 in the embodiment of the sixth aspect.

The above implementations only illustrate the embodiment of this disclosure. However, this disclosure is not limited thereto, and appropriate variants may be made on the basis of these implementations. For example, the above implementations may be executed separately, or one or more of them may be executed in a combined manner.

It should be noted that the components or modules related to this disclosure are only described above. However, this disclosure is not limited thereto, and the information processing apparatus 1700 may further include other components or modules, and reference may be made to related techniques for particulars of these components or modules.

Furthermore, for the sake of simplicity, connection relationships between the components or modules or signal profiles thereof are only illustrated in FIG. 17. However, it should be understood by those skilled in the art that such related techniques as bus connection, etc., may be adopted. And the above components or modules may be implemented by hardware, such as a processor, a memory, a transmitter, and a receiver, etc., which are not limited in the embodiment of this disclosure.

### Embodiment of a tenth aspect

The embodiment of this disclosure provides an information processing apparatus. The apparatus may be, for example, a network device, or one or some components or assemblies configured in the network device. Contents in this embodiment identical to those in the embodiment of the fifth aspect shall not be described herein any further.

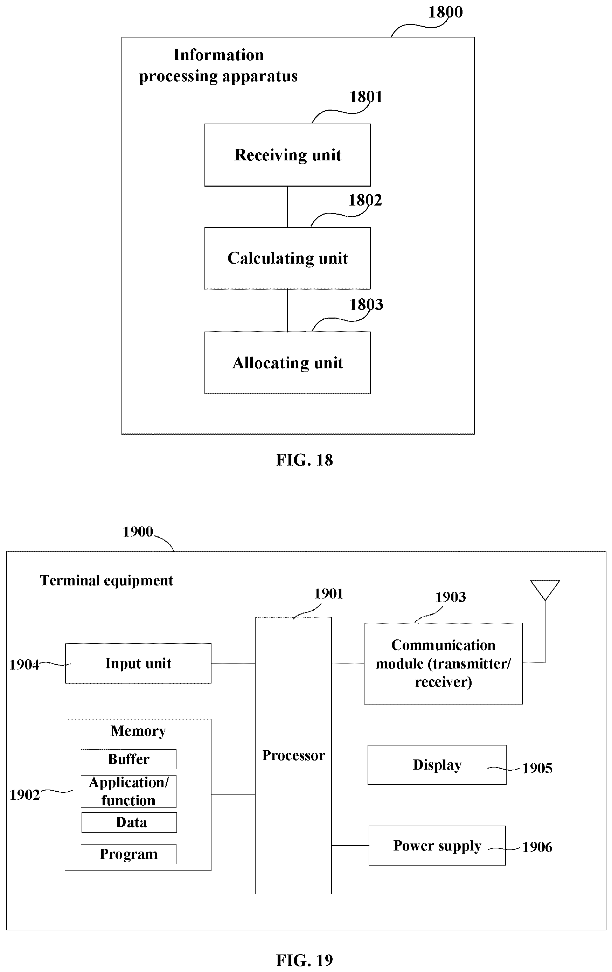

FIG. 18 is a schematic diagram of the information processing apparatus of the embodiment of this disclosure. As shown in FIG. 18, the information processing apparatus 1800 includes:
a receiving unit 1801 configured to receive delay information from a terminal equipment, the delay information including a first remaining time and a first time point associated with the first remaining time, and/or, the delay information including a second remaining time, the second remaining time being a second deadline and/or a time associated with a second time point.

In some embodiments, the delay information report is a buffer status report (BSR).

In some embodiments, the delay information is information associated with a data volume of data to be transmitted, and/or the first remaining time and/or the second remaining time is/are or indicate(s) a time associated with the data volume of the data to be transmitted.

In some embodiments, the data to be transmitted are a PDU set or buffered data in a logical channel group or logical channel, and/or the data to be transmitted are data buffered by a PDCP entity and/or data buffered by an RLC entity.

In some embodiments, the data volume may be a data volume buffered in a PDU set or a logical channel group or a logical channel, and/or the data volume may be a sum of a data volume buffered by a PDCP entity and a data volume buffered by an RLC entity.

In some embodiments, the delay information may include one or more first remaining times or second remaining times. For example, the delay information may include one or more first remaining times or second remaining times associated with the data to be transmitted or the data volume.

In some embodiments, when the delay information includes more than one first remaining times, the more than one first remaining times may be associated with one or more first time points.

In some embodiments, the first remaining time and/or the second remaining time is/are the following times that:
the data to be transmitted are transmitted to the network device within the first remaining time and/or the second remaining time; or,
the data to be transmitted are transmitted to the network device before the second remaining time.

In some embodiments, the first remaining time is or indicates a time derived according to the first time point.

In some embodiments, the first time point includes at least one of the following:
a time point at which the delay information report is triggered;
a time point at which the MAC CE including the delay information is generated;
a time point at which the MAC CE including the delay information is transmitted; or,
the first deadline.

In some embodiments, the time point at which the MAC CE including the delay information is transmitted includes a first system frame number (SFN) and/or a first symbol and/or a first slot of uplink resources for new transmission, or a last SFN and/or a last symbol and/or a last slot of uplink resources for new transmission.

In some embodiments, the other time point may be a time point between the time point at which the delay information report is triggered and the time point at which the MAC CE including the delay information is transmitted.

In some embodiments, the first deadline may include at least one of the following:
a time point when the first remaining time is 0;
a time point when a time period or a timer expires; and
a time point when a PSDB or a remaining PSDB or a PDB or a remaining PDB is 0.

In some embodiments, the time period or the timer is configured by the network or is predefined.

In some embodiments, a starting point of the time period may be the time point at which the delay information report is triggered, or the time point at which the MAC CE including the delay information is generated, or the time point at which the MAC CE including the delay information is transmitted; or, the timer may be started at the time point at which the delay information report is triggered, or the time point at which the MAC CE including the delay information is generated, or the time point at which the MAC CE including the delay information is transmitted.

In some embodiments, the first time point is denoted by an SFN and/or a slot and/or a symbol, or, the first time point may be denoted by an offset relative to a third time point.

In some embodiments, the third time point corresponds to an uplink resource or a time when a PDCCH is received.

In some embodiments, the second remaining time is or indicates a time derived according to the second time point.

In some embodiments, the second time point is configured by the network or is preset.

In some embodiments, the second time point includes the time point at which the MAC CE including the delay information is transmitted.

In some embodiments, the time point at which the MAC CE including the delay information is transmitted includes a first SFN and/or a first symbol and/or a first slot of uplink resources used for new transmission, or a last SFN and/or a last symbol and/or a last slot of uplink resources used for new transmission.

In some embodiments, the second deadline includes at least one of the following:
a time point at which a time period or a timer expires;
a time point at which a PSDB or a remaining PSDB or a PDB or a remaining PDB is 0; and
a deadline of data transmission determined by the terminal equipment according to implementation.

In some embodiments, the time period or the timer is configured by the network or is predefined.

In some embodiments, a starting point of the time period may be the time point at which the delay information report is triggered, or the time point at which the MAC CE including the delay information is generated, or the time point at which the MAC CE including the delay information is transmitted; or, the timer may be started at the time point at which the delay information report is triggered, or the time point at which the MAC CE including the delay information is generated, or the time point at which the MAC CE including the delay information is transmitted.

In some embodiments, the second deadline is denoted by an SFN and/or a slot and/or a symbol and/or an absolute time, or, the second deadline is denoted by an offset relative to a fourth time point

In some embodiments, the fourth time point corresponds to a time of an uplink resource or receiving a PDCCH.

In some embodiments, the delay information and the data volume information are included in the same MAC CE.

In some embodiments, the MAC CE including the delay information is a BSR MAC CE, or the MAC CE is an MAC CE different from a BSR MAC CE.

In some embodiments, the delay information may include information of the data volume of the data to be transmitted. For example, the delay information includes relevant information of the remaining time and information of the data volume of the data to be transmitted.

In some embodiments, the information processing apparatus 1800 may further include:
a calculating unit 1802 configured to calculate a third remaining time according to the first remaining time and the first time point, and/or calculate a third remaining time according to the second remaining time.

In some embodiments, the information processing apparatus 1800 may further include:
an allocating unit 1803 configured to allocate uplink resources according to the third remaining time.

The above implementations only illustrate the embodiment of this disclosure. However, this disclosure is not limited thereto, and appropriate variants may be made on the basis of these implementations. For example, the above implementations may be executed separately, or one or more of them may be executed in a combined manner.

It should be noted that the components or modules related to this disclosure are only described above. However, this disclosure is not limited thereto, and the information processing apparatus 1800 may further include other components or modules, and reference may be made to related techniques for particulars of these components or modules.

Furthermore, for the sake of simplicity, connection relationships between the components or modules or signal profiles thereof are only illustrated in FIG. 18. However, it should be understood by those skilled in the art that such related techniques as bus connection, etc., may be adopted. And the above components or modules may be implemented by hardware, such as a processor, a memory, a transmitter, and a receiver, etc., which are not limited in the embodiment of this disclosure.

It can be seen from the above embodiment that the delay information includes a first remaining time and a first time point associated with the first remaining time, and/or, the delay information includes a second remaining time, the second remaining time being a second deadline and/or a time associated with a second time point. Hence, a network device is able to accurately determine delay information of services, which is helpful to allocating uplink resources satisfying requirements on service delay by the network device, and is beneficial to ensure QoS of the services.

### Embodiment of an eleventh aspect

The embodiment of this disclosure provides a communication system, and reference may be made to FIG. 1, with contents identical to those in the embodiments of the first to the tenth aspects being not going to be described herein any further.

In some embodiments, the communication system 100 may at least include a network device and a terminal equipment, wherein the network device may be the network device described in the embodiment of the tenth aspect, and the terminal equipment may be the terminal equipment described in the embodiment of the sixth or ninth aspect.

For example, the network device receives delay information from the terminal equipment, the delay information including a first remaining time and a first time point associated with the first remaining time, and/or, the delay information including a second remaining time, the second remaining time being a second deadline and/or a time associated with a second time point.

For example, the terminal equipment triggers delay information report, and transmits the delay information to the network device, the delay information including a first remaining time and a first time point associated with the first remaining time, and/or, the delay information including a second remaining time, the second remaining time being a second deadline and/or a time associated with a second time point. For another example, the terminal equipment triggers delay information report, and cancels the delay information report in a case where a first condition is satisfied. For a further example, the terminal equipment triggers a scheduling request in a case where delay information report is triggered. For still another example, the terminal equipment allocates uplink resources according to a priority of an MAC CE including delay information in a logical channel prioritization procedure, and transmits the MAC CE in the uplink resources.

The embodiment of this disclosure further provides a terminal equipment; however, this disclosure is not limited thereto, and it may also be another equipment.

FIG. 19 is a schematic diagram of the terminal equipment of the embodiment of this disclosure. As shown in FIG. 19, the terminal equipment 1900 may include a processor 1901 and a memory 1902, the memory 1902 storing data and a program and being coupled to the processor 1901. It should be noted that this figure is illustrative only, and other types of structures may also be used, so as to supplement or replace this structure and achieve a telecommunications function or other functions.

For example, the processor 1901 may be configured to execute a program to carry out the information processing method as described in at least one of the embodiments of the first to fourth aspects. For example, the processor 1901 may be configured to execute the following control: triggering delay information report; and transmitting the delay information to a network device, the delay information including a first remaining time and a first time point associated with the first remaining time, and/or, the delay information including a second remaining time, the second remaining time being a second deadline and/or a time associated with a second time point. For another example, the processor 1901 may be configured to execute the following control: triggering delay information report; and cancelling the delay information report in a case where a first condition is satisfied. For a further example, the processor 1901 may be configured to execute the following control: triggering a scheduling request in a case where delay information report is triggered and a third condition is satisfied. For still another example, the processor 1901 may be configured to execute the following control: allocating uplink resources by the terminal equipment according to a priority of an MAC CE including delay information in a logical channel prioritization procedure; and transmitting the MAC CE in the uplink resources.

As shown in FIG. 19, the terminal equipment 1900 may further include a communication module 1903, an input unit 1904, a display 1905, and a power supply 1906; wherein functions of the above components are similar to those in the related art, which shall not be described herein any further. It should be noted that the terminal equipment 1900 does not necessarily include all the parts shown in FIG. 19, and the above components are not necessary. Furthermore, the terminal equipment 1900 may include parts not shown in FIG. 19, and the related art may be referred to.

The embodiment of this disclosure further provides a network device, which may be, for example, a base station. However, this disclosure is not limited thereto, and it may also be another network device.

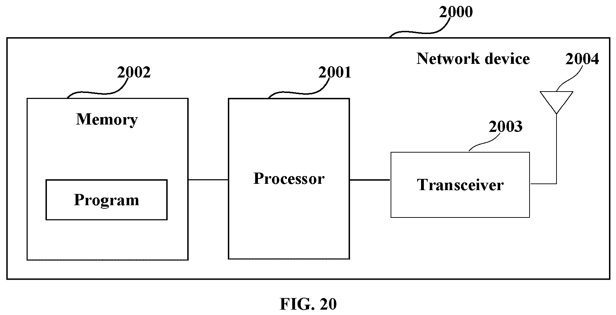

FIG. 20 is a schematic diagram of a structure of the network device of the embodiment of this disclosure. As shown in FIG. 20, the network device 2000 may include a processor 2001 (such as a central processing unit (CPU)) and a memory 2002, the memory 2002 being coupled to the processor 2001. Wherein, the memory 2002 may store various data, and furthermore, it may store a program for information processing, and execute the program under control of the processor 2001.

For example, the processor 2001 may be configured to execute a program to carry out the information processing method as described in the embodiment of the fifth aspect. For example, the processor2001 may be configured to execute the following control: receiving delay information from a terminal equipment, the delay information including a first remaining time and a first time point associated with the first remaining time, and/or, the delay information including a second remaining time, the second remaining time being a second deadline and/or a time associated with a second time point.

Furthermore, as shown in FIG. 20, the network device 2000 may include a transceiver 2004, and an antenna 2005, etc. Wherein, functions of the above components are similar to those in the related art, and shall not be described herein any further. It should be noted that the network device 2000 does not necessarily include all the parts shown in FIG. 20, and furthermore, the network device 2000 may include parts not shown in FIG. 20, and the related art may be referred to.

The above implementations only illustrate the embodiment of this disclosure. However, this disclosure is not limited thereto, and appropriate variants may be made on the basis of these implementations. For example, the above implementations may be executed separately, or one or more of them may be executed in a combined manner. For example, the embodiments of the first to fourth aspects may be implemented separately, or the embodiments of the first to fourth aspects may be implemented by combining multiple of them.

An embodiment of this disclosure provides a computer readable program code, which, when executed in a terminal equipment, will cause the terminal equipment to carry out the information processing method as described in at least one of the embodiments of the first to fourth aspects.

An embodiment of this disclosure provides a computer readable medium, including a computer readable program code, which will cause a terminal equipment to carry out the information processing method as described in at least one of the embodiments of the first to fourth aspects.

An embodiment of this disclosure provides a computer readable program code, which, when executed in a network device, will cause the network device to carry out the information processing method as described in the embodiment of the fifth aspect.

An embodiment of this disclosure provides a computer readable medium, including a computer readable program code, which will cause a network device to carry out the information processing method as described in the embodiment of the fifth aspect.

The above apparatuses and methods of this disclosure may be implemented by hardware, or by hardware in combination with software. This disclosure relates to such a computer-readable program that when the program is executed by a logic device, the logic device is enabled to carry out the apparatus or components as described above, or to carry out the methods or steps as described above. This disclosure also relates to a storage medium for storing the above program, such as a hard disk, a floppy disk, a CD, a DVD, and a flash memory, etc.

The methods/apparatuses described with reference to the embodiments of this disclosure may be directly embodied as hardware, software modules executed by a processor, or a combination thereof. For example, one or more functional block diagrams and/or one or more combinations of the functional block diagrams shown in the drawings may either correspond to software modules of procedures of a computer program, or correspond to hardware modules. Such software modules may respectively correspond to the steps shown in the drawings. And the hardware module, for example, may be carried out by firming the soft modules by using a field programmable gate array (FPGA).

The soft modules may be located in an RAM, a flash memory, an ROM, an EPROM, and EEPROM, a register, a hard disc, a floppy disc, a CD-ROM, or any memory medium in other forms known in the art. A memory medium may be coupled to a processor, so that the processor may be able to read information from the memory medium, and write information into the memory medium; or the memory medium may be a component of the processor. The processor and the memory medium may be located in an ASIC. The soft modules may be stored in a memory of a mobile terminal, and may also be stored in a memory card of a pluggable mobile terminal. For example, if equipment (such as a mobile terminal) employs an MEGA-SIM card of a relatively large capacity or a flash memory device of a large capacity, the soft modules may be stored in the MEGA-SIM card or the flash memory device of a large capacity.

One or more functional blocks and/or one or more combinations of the functional blocks in the drawings may be realized as a universal processor, a digital signal processor (DSP), an application-specific integrated circuit (ASIC), a field programmable gate array (FPGA) or other programmable logic devices, discrete gate or transistor logic devices, discrete hardware component or any appropriate combinations thereof carrying out the functions described in this application. And the one or more functional block diagrams and/or one or more combinations of the functional block diagrams in the drawings may also be realized as a combination of computing equipment, such as a combination of a DSP and a microprocessor, multiple processors, one or more microprocessors in communication combination with a DSP, or any other such configuration.

This disclosure is described above with reference to particular embodiments. However, it should be understood by those skilled in the art that such a description is illustrative only, and not intended to limit the protection scope of the present disclosure. Various variants and modifications may be made by those skilled in the art according to the principle of the present disclosure, and such variants and modifications fall within the scope of the present disclosure.

As to implementations containing the above embodiments, following supplements are further disclosed.

### Information processing methods at a terminal equipment side

### Part I

1. An information processing method, applicable to a terminal equipment, the information processing method including:
   triggering delay information report; and
   transmitting the delay information to a network device, the delay information including a first remaining time and a first time point associated with the first remaining time, and/or, the delay information including a second remaining time, the second remaining time being a second deadline and/or a time associated with a second time point.

   1A. The method according to supplement 1, wherein,
      the delay information report is a buffer status report.
   1B. The method according to supplement 1, wherein the method further includes:
      generating an MAC CE including the delay information.
2. The method according to supplement 1, wherein,
   the delay information is information associated with data volume information of data to be transmitted, and/or the first remaining time and/or the second remaining time is/are a time/times associated with the data volume information of the data to be transmitted.
3. The method according to supplement 2, wherein,
   the data to be transmitted are data buffered in a PDU set or a logical channel group or a logical channel, and/or, the data to be transmitted are data buffered by a PDCP entity and/or data buffered by an RLC entity.
   3a. The method according to supplement 2, wherein,
      the data volume is a data volume buffered in a PDU set or a logical channel group or a logical channel, and/or the data volume may be a sum of a data volume buffered by a PDCP entity and a data volume buffered by an RLC entity.
   3b. The method according to supplement 1, wherein,
      the delay information includes one or more first remaining times or second remaining times.
   3c. The method according to supplement 4, wherein,
      when the delay information includes more than one first remaining times, the more than one first remaining times are associated with one or more first time points.
4. The method according to supplement 2, wherein the first remaining time and/or the second remaining time is/are as follows that:
   the data to be transmitted are transmitted to the network device within the first remaining time and/or the second remaining time; or,
   the data to be transmitted are transmitted to the network device before the second remaining time.
5. The method according to supplement 1, wherein,
   the first remaining time is a time derived based on the first time point.
6. The method according to supplement 1, wherein the first time point includes at least one of the following:
   a time point at which the delay information report is triggered;
   a time point at which the MAC CE including the delay information is generated;
   a time point at which the MAC CE including the delay information is transmitted;
   another time point; or
   a first deadline.
7. The method according to supplement 6, wherein,
   the time point at which the MAC CE including the delay information is transmitted includes a first SFN and/or symbol and/or slot of uplink resources for new transmission, or a last SFN and/or symbol and/or slot of uplink resources for new transmission.
   7a. The method according to supplement 6, wherein,
   the other time point is a time point between the time point at which the delay information report is triggered and the time point at which the MAC CE including the delay information is transmitted.
8. The method according to supplement 6, wherein the first deadline includes at least one of the following:
   a time point at which the first remaining time is 0;
   a time point at which a time period or a timer expires; and
   a time point at which a PSDB or a remaining PSDB or a PDB or a remaining PDB is 0.
9. The method according to supplement 8, wherein,
   the time period or the timer is configured by the network or is predefined.
   9a. The method according to supplement 8, wherein,
   a starting point of the time period is the time point at which the delay information report is triggered or the time point at which the MAC CE including the delay information is generated or the time point at which the MAC CE including the delay information is transmitted; or,
   the timer may be started at the time point at which the delay information report is triggered, or the time point at which the MAC CE including the delay information is generated, or the time point at which the MAC CE including the delay information is transmitted.
10. The method according to supplement 1, wherein,
   the first time point is denoted by an SFN and/or a slot and/or a symbol and/or an absolute time, or the first time point is denoted by an offset relative to a third time point.
11. The method according to supplement 10, wherein,
   the third time point corresponds to an uplink resource or a time when a PDCCH is received.
12. The method according to supplement 1, wherein,
   the second remaining time point is or indicates a time derived based on the second time point.
13. The method according to supplement 1, wherein,
   the second time point is configured by a network or is preset.
14. The method according to supplement 1, wherein,
   the second time point includes the time point at which the MAC CE including the delay information is transmitted.
15. The method according to supplement 14, wherein,
   the time point at which the MAC CE including the delay information is transmitted includes the first SFN and/or symbol and/or slot of uplink resources for new transmission, or the last SFN and/or symbol and/or slot of uplink resources for new transmission.
16. The method according to supplement 1, wherein the second deadline includes at least one of the following:
   a time point at which a time period or a timer expires;
   a time point at which a PSDB or a remaining PSDB or a PDB or a remaining PDB is 0; and
   a deadline of data transmission determined by the terminal equipment according to implementation.
17. The method according to supplement 16, wherein,
   the time period or the timer is configured by the network or is predefined.
   17a. The method according to supplement 16, wherein,
   a starting point of the time period is the time point at which the delay information report is triggered or the time point at which the MAC CE including the delay information is generated or the time point at which the MAC CE including the delay information is transmitted; or,
   the timer may be started at the time point at which the delay information report is triggered, or the time point at which the MAC CE including the delay information is generated, or the time point at which the MAC CE including the delay information is transmitted.
18. The method according to supplement 1, wherein,
   the second deadline is denoted by an SFN and/or a slot and/or a symbol and/or an absolute time, or the second deadline is denoted by an offset relative to a fourth time point.
19. The method according to supplement 18, wherein,
   the fourth time point corresponds to a time of an uplink resource or receiving a PDCCH.
20. The method according to supplement 2, wherein,
   the delay information and the data volume information are included in the same MAC CE.
21. The method according to supplement 1B, wherein,
   the MAC CE is a BSR MAC CE, or the MAC CE is an MAC CE different from a BSR MAC CE.

### Part II

1. An information processing method, applicable to a terminal equipment, the information processing method including:
   triggering delay information report; and
   cancelling the delay information report in a case where a first condition is satisfied.
2. The method according to supplement 1, wherein the first condition is at least one of the following that:
   an uplink resource used for new transmission is later than a fifth time point;
   when an MAC CE including the delay information is generated or transmitted, a remaining time is 0 or below a first threshold;
   when timer 1 expires, the MAC CE including the delay information has not been generated or transmitted, or there is still no available uplink resource for transmitting MAC CE;
   an uplink resource (or UL grant) is able to accommodate all data to be transmitted, and is not able to additionally accommodate the MAC CE including the delay information and its header; and
   an MAC PDU is transmitted and includes the delay information.
3. The method according to supplement 1 or 2, wherein,
   the delay information is information associated with data volume information of the data to be transmitted, and/or, the remaining time is a time associated with a data volume of the data to be transmitted.
4. The method according to supplement 2, wherein,
   the fifth time point is preconfigured (predefined) or is configured by the network, and/or
   the first threshold is preconfigured (pre-defined) or is configured by the network, and/or,
   timer 1 is preconfigured (pre-defined) or is configured by the network.
5. The method according to supplement 2, wherein that the MAC PDU includes the delay information may include that:
   the MAC PDU includes the MAC CE of the delay information and its subheader, and the MAC CE includes all delay information to be reported or includes delay information of a latest event triggering delay information report.
6. An information processing method, applicable to a terminal equipment, the information processing method including:
   triggering delay information report; and
   generating an MAC PDU including the delay information in a case where a second condition is satisfied.
7. The method according to supplement 6, wherein the second condition includes that:
   the delay information report is triggered, the uplink resource is able to be used for new transmission and the uplink resource may accommodate the MAC CE including the delay information and its subheader, and the uplink resource satisfies at least one of the following that:
   the uplink resource is earlier than a sixth time point;
   the uplink resource is within a remaining time (before a remaining time is 0 or less than a second threshold);
   the uplink resource is before timer 2 expires;
   a PUSCH duration of the uplink resource is less than the first threshold; and
   a subcarrier spacing (SCS) (or its index) of the uplink resource is included in a subcarrier spacing (or its index) set configured for a PDU set or a logical channel group or a logical channel that triggers delay information report.
8. The method according to supplement 7, wherein,
   the sixth time point is configured by the network or is determined by the terminal equipment; and/or,
   timer 2 is preconfigured (pre-defined) or is configured by the network; and/or,
   the first threshold is less than or equal to a PUSCH duration configured for a PDU set or a logical channel group or a logical channel that triggers delay information report.
9. The method according to supplement 7, wherein,
   timer 2 is started when the delay information report is triggered.

### Part III

1. An information processing method, applicable to a terminal equipment, the information processing method including:
   triggering a scheduling request in a case where delay information report is triggered and a third condition is satisfied.
2. The method according to supplement 1, wherein the third condition includes at least one of the following that:
   there exists no uplink resource available for new transmission;
   there exist uplink resources available for new transmission and the uplink resources are unable to accommodate the MAC CE including the delay information and its subheader;
   there exist uplink resources available for new transmission and the uplink resources are later than a seventh time point;
   the remaining time at a time corresponding to an uplink resource is 0 or less than a third threshold;
   timer 3 expires at the time corresponding to the uplink resource;
   a PUSCH duration of uplink resources is equal to or greater than the second threshold; and
   a subcarrier spacing (SCS) (or its index) of uplink resources is not included in a subcarrier spacing (or its index) set configured for a PDU set or a logical channel group or a logical channel that triggers delay information report.
3. The method according to supplement 1, wherein,
   the seventh time point is configured by the network or determined by the terminal equipment, and/or
   timer 3 is preconfigured (predefined) or may be configured by the network, and/or
   the second threshold is greater than or equal to a PUSCH duration configured for a PDU set or a logical channel group or a logical channel that triggers delay information report.
4. The method according to supplement 3, wherein,
   timer 3 is started when the delay information report is triggered.
5. The method according to supplement 1, wherein,
   the scheduling request configuration used for the scheduling request is configured by the network device.
6. The method according to supplement 5, wherein the scheduling request configuration is at least one of the following:
   a scheduling request configuration configured for delay information report;
   a scheduling request configuration to which a logical channel triggering BSR corresponds; and
   a scheduling request configuration configured for other control information.

### Part IV

1. An information processing method, applicable to a terminal equipment, the information processing method including:
   allocating uplink resources according to a priority of an MAC CE including delay information in a logical channel prioritization procedure; and
   transmitting the MAC CE in the uplink resources.
2. The method according to supplement 1, wherein,
   the priority of the MAC CE is at least one of the following that:
   is higher than an MAC CE for a (extended) BSR or an MAC CE for an SL-BSR prioritized;
   is higher than an MAC CE for timing advance report;
   is higher than an MAC CE for (enhanced) single entry PHR or an MAC CE for (enhanced) multiple entry PHR;
   is lower than an MAC CE for C-RNTI or data from a UL-CCCCH;
   is lower than an MAC CE for (enhanced) BFR or an MAC CE for configured grant confirmation or an MAC CE for multiple entry configured grant confirmation;
   is lower than an MAC CE for sidelink configured grant confirmation;
   is lower than an MAC CE for LBT failure; and
   is lower than an MAC CE for a (extended) BSR or an MAC CE for an SL-BSR prioritized.

### Information processing apparatuses at a terminal equipment side

### Part I

1. An information processing apparatus, configured in a terminal equipment, the information processing apparatus including:
   a triggering unit configured to trigger delay information report; and
   a transmitting unit configured to transmit the delay information to a network device, the delay information including a first remaining time and a first time point associated with the first remaining time, and/or, the delay information including a second remaining time, the second remaining time being a second deadline and/or a time associated with a second time point.

### Part II

1. An information processing apparatus, configured in a terminal equipment, the information processing apparatus including:
   a triggering unit configured to trigger delay information report; and
   a cancelling unit configured to cancel the delay information report in a case where a first condition is satisfied.
2. The apparatus according to supplement 1, wherein the first condition is at least one of the following that:
   an uplink resource used for new transmission is later than a fifth time point;
   when an MAC CE including the delay information is generated or transmitted, a remaining time is 0 or below a first threshold;
   when timer 1 expires, the MAC CE including the delay information has not been generated or transmitted, or there is still no available uplink resource for transmitting MAC CE;
   an uplink resource (or UL grant) is able to accommodate all data to be transmitted, and is not able to additionally accommodate the MAC CE including the delay information and its header; and
   an MAC PDU is transmitted and includes the delay information.
3. The apparatus according to supplement 1 or 2, wherein,
   the delay information is information associated with data volume information of the data to be transmitted, and/or, the remaining time is a time associated with a data volume of the data to be transmitted.
4. The apparatus according to supplement 2, wherein,
   the fifth time point is preconfigured (predefined) or is configured by the network, and/or
   the first threshold is preconfigured (pre-defined) or is configured by the network, and/or,
   timer 1 is preconfigured (pre-defined) or is configured by the network.
5. The apparatus according to supplement 2, wherein that the MAC PDU includes the delay information may include that:
   the MAC PDU includes the MAC CE of the delay information and its subheader, and the MAC CE includes all delay information to be reported or includes delay information of a latest event triggering delay information report.
6. An information processing apparatus, configured a terminal equipment, the information processing apparatus including:
   a triggering unit configured to trigger delay information report; and
   a generating unit configured to generate an MAC PDU including the delay information in a case where a second condition is satisfied.
7. The apparatus according to supplement 6, wherein the second condition includes that:
   the delay information report is triggered, the uplink resource is able to be used for new transmission and the uplink resource may accommodate the MAC CE including the delay information and its subheader, and the uplink resource satisfies at least one of the following that:
   the uplink resource is earlier than a sixth time point;
   the uplink resource is within a remaining time (before a remaining time is 0 or less than a second threshold);
   the uplink resource is before timer 2 expires;
   a PUSCH duration of the uplink resource is less than the first threshold; and
   a subcarrier spacing (SCS) (or its index) of the uplink resource is included in a subcarrier spacing (or its index) set configured for a PDU set or a logical channel group or a logical channel that triggers delay information report.
8. The apparatus according to supplement 7, wherein,
   the sixth time point is configured by the network or is determined by the terminal equipment; and/or,
   timer 2 is preconfigured (pre-defined) or is configured by the network; and/or,
   the first threshold is less than or equal to a PUSCH duration configured for a PDU set or a logical channel group or a logical channel that triggers delay information report.
9. The apparatus according to supplement 7, wherein,
   timer 2 is started when the delay information report is triggered.

### Part III

1. An information processing apparatus, configured in a terminal equipment, the information processing apparatus including:
   a triggering unit configured to trigger a scheduling request in a case where delay information report is triggered and a third condition is satisfied.
2. The apparatus according to supplement 1, wherein the third condition includes at least one of the following that:
   there exists no uplink resource available for new transmission;
   there exist uplink resources available for new transmission and the uplink resources are unable to accommodate the MAC CE including the delay information and its subheader;
   there exist uplink resources available for new transmission and the uplink resources are later than a seventh time point;
   the remaining time at a time corresponding to an uplink resource is 0 or less than a third threshold;
   timer 3 expires at the time corresponding to the uplink resource;
   a PUSCH duration of uplink resources is equal to or greater than the second threshold; and
   a subcarrier spacing (SCS) (or its index) of uplink resources is not included in a subcarrier spacing (or its index) set configured for a PDU set or a logical channel group or a logical channel that triggers delay information report.
3. The apparatus according to supplement 1, wherein,
   the seventh time point is configured by the network or determined by the terminal equipment, and/or
   timer 3 is preconfigured (predefined) or may be configured by the network, and/or
   the second threshold is greater than or equal to a PUSCH duration configured for a PDU set or a logical channel group or a logical channel that triggers delay information report.
4. The apparatus according to supplement 3, wherein,
   timer 3 is started when the delay information report is triggered.
5. The apparatus according to supplement 1, wherein,
   the scheduling request configuration used for the scheduling request is configured by the network device.
6. The apparatus according to supplement 5, wherein the scheduling request configuration is at least one of the following:
   a scheduling request configuration configured for delay information report;
   a scheduling request configuration to which a logical channel triggering BSR corresponds; and
   a scheduling request configuration configured for other control information.

### Part IV

1. An information processing apparatus, configured in a terminal equipment, the information processing apparatus including:
   an allocating unit configured to allocate uplink resources according to a priority of an MAC CE including delay information in a logical channel prioritization procedure; and
   a transmitting unit configured to transmit the MAC CE in the uplink resources.
2. The apparatus according to supplement 1, wherein the priority of the MAC CE is at least one of the following that:
   is higher than an MAC CE for a (extended) BSR or an MAC CE for an SL-BSR prioritized;
   is higher than an MAC CE for timing advance report;
   is higher than an MAC CE for (enhanced) single entry PHR or an MAC CE for (enhanced) multiple entry PHR;
   is lower than an MAC CE for C-RNTI or data from a UL-CCCCH;
   is lower than an MAC CE for (enhanced) BFR or an MAC CE for configured grant confirmation or an MAC CE for multiple entry configured grant confirmation;
   is lower than an MAC CE for sidelink configured grant confirmation;
   is lower than an MAC CE for LBT failure; and
   is lower than an MAC CE for a (extended) BSR or an MAC CE for an SL-BSR prioritized.

### Terminal equipment

1. A terminal equipment, including a memory and a processor, the memory storing a computer program, and the processor being configured to execute the computer program to carry out the methods as described in the supplements regarding methods.

Information processing method at a network device side
1. An information processing method, applicable to a network device, the information processing method including:
   receiving delay information from a terminal equipment, the delay information including a first remaining time and a first time point associated with the first remaining time, and/or, the delay information including a second remaining time, the second remaining time being a second deadline and/or a time associated with a second time point.
   1A. The method according to supplement 1, wherein,
   the delay information report is a buffer status report (BSR).
2. The method according to supplement 1, wherein,
   the delay information is information associated with a data volume of data to be transmitted, and/or the first remaining time and/or the second remaining time is/are or indicate(s) a time associated with the data volume of the data to be transmitted.
3. The method according to supplement 2, wherein,
   the data to be transmitted are a PDU set or buffered data in a logical channel group or logical channel, and/or the data to be transmitted are data buffered by a PDCP entity and/or data buffered by an RLC entity.
   3a. The method according to supplement 2, wherein,
      the data volume is a data volume buffered in a PDU set or a logical channel group or a logical channel, and/or the data volume may be a sum of a data volume buffered by a PDCP entity and a data volume buffered by an RLC entity.
   3b. The method according to supplement 1, wherein,
      the delay information includes one or more first remaining times or second remaining times.
   3c. The method according to supplement 4, wherein,
      when the delay information includes more than one first remaining times, the more than one first remaining times is associated with one or more first time points.
4. The method according to supplement 2, wherein the first remaining time and/or the second remaining time is/are the following times that:
   the data to be transmitted are transmitted to the network device within the first remaining time and/or the second remaining time; or,
   the data to be transmitted are transmitted to the network device before the second remaining time.
5. The method according to supplement 1, wherein,
   the first remaining time is or indicates a time derived according to the first time point.
6. The method according to supplement 1, wherein the first time point includes at least one of the following:
   a time point at which the delay information report is triggered;
   a time point at which the MAC CE including the delay information is generated;
   a time point at which the MAC CE including the delay information is transmitted;
   another time point; or
   the first deadline.
7. The method according to supplement 6, wherein,
   the time point at which the MAC CE including the delay information is transmitted includes a first system frame number (SFN) and/or a first symbol and/or a first slot of uplink resources for new transmission, or a last SFN and/or a last symbol and/or a last slot of uplink resources for new transmission.
   7a. The method according to supplement 6, wherein,
   the other time point is a time point between the time point at which the delay information report is triggered and the time point at which the MAC CE including the delay information is transmitted.
8. The method according to supplement 6, wherein the first deadline includes at least one of the following:
   a time point when the first remaining time is 0;
   a time point when a time period or a timer expires; and
   a time point when a PSDB or a remaining PSDB or a PDB or a remaining PDB is 0.
9. The method according to supplement 8, wherein,
   the time period or the timer is configured by the network or is predefined.
   9a. The method according to supplement 8, wherein,
   a starting point of the time period is the time point at which the delay information report is triggered, or the time point at which the MAC CE including the delay information is generated, or the time point at which the MAC CE including the delay information is transmitted; or,
   the timer is started at the time point at which the delay information report is triggered, or the time point at which the MAC CE including the delay information is generated, or the time point at which the MAC CE including the delay information is transmitted.
10. The method according to supplement 1, wherein,
   the first time point is denoted by an SFN and/or a slot and/or a symbol, or, the first time point is denoted by an offset relative to a third time point.
11. The method according to supplement 10, wherein,
   the third time point corresponds to an uplink resource or a time when a PDCCH is received.
12. The method according to supplement 1, wherein,
   the second remaining time is or indicates a time derived according to the second time point.
13. The method according to supplement 1, wherein,
   the second time point is configured by the network or is preset.
14. The method according to supplement 1, wherein,
   the second time point includes the time point at which the MAC CE including the delay information is transmitted.
15. The method according to supplement 14, wherein,
   the time point at which the MAC CE including the delay information is transmitted includes a first SFN and/or a first symbol and/or a first slot of uplink resources used for new transmission, or a last SFN and/or a last symbol and/or a last slot of uplink resources used for new transmission.
16. The method according to supplement 1, wherein the second deadline includes at least one of the following:
   a time point at which a time period or a timer expires;
   a time point at which a PSDB or a remaining PSDB or a PDB or a remaining PDB is 0; and
   a deadline of data transmission determined by the terminal equipment according to implementation.
17. The method according to supplement 16, wherein,
   the time period or the timer is configured by the network or is predefined.
   17a. The method according to supplement 16, wherein,
   a starting point of the time period is the time point at which the delay information report is triggered, or the time point at which the MAC CE including the delay information is generated, or the time point at which the MAC CE including the delay information is transmitted; or,
   the timer is started at the time point at which the delay information report is triggered, or the time point at which the MAC CE including the delay information is generated, or the time point at which the MAC CE including the delay information is transmitted.
18. The method according to supplement 1, wherein,
   the second deadline is denoted by an SFN and/or a slot and/or a symbol and/or an absolute time, or, the second deadline is denoted by an offset relative to a fourth time point
19. The method according to supplement 18, wherein,
   the fourth time point corresponds to a time of an uplink resource or receiving a PDCCH.
20. The method according to supplement 2, wherein,
   the delay information and the data volume information are included in the same MAC CE.
21. The method according to supplement 1, wherein,
   the MAC CE including the delay information is a BSR MAC CE, or the MAC CE is an MAC CE different from a BSR MAC CE.
22. The method according to supplement 1, wherein the method further includes:
   calculating a third remaining time according to the first remaining time and the first time point, and/or calculating a third remaining time according to the second remaining time, by the network device.
23. The method according to supplement 22, wherein the method further includes:
   allocating uplink resources according to the third remaining time.

Information processing apparatus at a network device side
1. An information processing apparatus, configured in a network device, the information processing apparatus including:
   a receiving unit configured to receive delay information from a terminal equipment, the delay information including a first remaining time and a first time point associated with the first remaining time, and/or, the delay information including a second remaining time, the second remaining time being a second deadline and/or a time associated with a second time point.
   1A. The apparatus according to supplement 1, wherein,
   the delay information report is a buffer status report (BSR).
2. The apparatus according to supplement 1, wherein,
   the delay information is information associated with a data volume of data to be transmitted, and/or the first remaining time and/or the second remaining time is/are or indicate(s) a time associated with the data volume of the data to be transmitted.
3. The apparatus according to supplement 2, wherein,
   the data to be transmitted are a PDU set or buffered data in a logical channel group or logical channel, and/or the data to be transmitted are data buffered by a PDCP entity and/or data buffered by an RLC entity.
   3a. The apparatus according to supplement 2, wherein,
      the data volume is a data volume buffered in a PDU set or a logical channel group or a logical channel, and/or the data volume may be a sum of a data volume buffered by a PDCP entity and a data volume buffered by an RLC entity.
   3b. The apparatus according to supplement 1, wherein,
      the delay information includes one or more first remaining times or second remaining times.
   3c. The apparatus according to supplement 4, wherein,
      when the delay information includes more than one first remaining times, the more than one first remaining times is associated with one or more first time points.
4. The apparatus according to supplement 2, wherein the first remaining time and/or the second remaining time is/are the following times that:
   the data to be transmitted are transmitted to the network device within the first remaining time and/or the second remaining time; or,
   the data to be transmitted are transmitted to the network device before the second remaining time.
5. The apparatus according to supplement 1, wherein,
   the first remaining time is or indicates a time derived according to the first time point.
6. The apparatus according to supplement 1, wherein the first time point includes at least one of the following:
   a time point at which the delay information report is triggered;
   a time point at which the MAC CE including the delay information is generated;
   a time point at which the MAC CE including the delay information is transmitted;
   another time point; or
   the first deadline.
7. The apparatus according to supplement 6, wherein,
   the time point at which the MAC CE including the delay information is transmitted includes a first system frame number (SFN) and/or a first symbol and/or a first slot of uplink resources for new transmission, or a last SFN and/or a last symbol and/or a last slot of uplink resources for new transmission.
   7a. The apparatus according to supplement 6, wherein,
   the other time point is a time point between the time point at which the delay information report is triggered and the time point at which the MAC CE including the delay information is transmitted.
8. The apparatus according to supplement 6, wherein the first deadline includes at least one of the following:
   a time point when the first remaining time is 0;
   a time point when a time period or a timer expires; and
   a time point when a PSDB or a remaining PSDB or a PDB or a remaining PDB is 0.
9. The apparatus according to supplement 8, wherein,
   the time period or the timer is configured by the network or is predefined.
   9a. The apparatus according to supplement 8, wherein,
   a starting point of the time period is the time point at which the delay information report is triggered, or the time point at which the MAC CE including the delay information is generated, or the time point at which the MAC CE including the delay information is transmitted; or,
   the timer is started at the time point at which the delay information report is triggered, or the time point at which the MAC CE including the delay information is generated, or the time point at which the MAC CE including the delay information is transmitted.
10. The apparatus according to supplement 1, wherein,
   the first time point is denoted by an SFN and/or a slot and/or a symbol, or, the first time point is denoted by an offset relative to a third time point.
11. The apparatus according to supplement 10, wherein,
   the third time point corresponds to an uplink resource or a time when a PDCCH is received.
12. The apparatus according to supplement 1, wherein,
   the second remaining time is or indicates a time derived according to the second time point.
13. The apparatus according to supplement 1, wherein,
   the second time point is configured by the network or is preset.
14. The apparatus according to supplement 1, wherein,
   the second time point includes the time point at which the MAC CE including the delay information is transmitted.
15. The apparatus according to supplement 14, wherein,
   the time point at which the MAC CE including the delay information is transmitted includes a first SFN and/or a first symbol and/or a first slot of uplink resources used for new transmission, or a last SFN and/or a last symbol and/or a last slot of uplink resources used for new transmission.
16. The apparatus according to supplement 1, wherein the second deadline includes at least one of the following:
   a time point at which a time period or a timer expires;
   a time point at which a PSDB or a remaining PSDB or a PDB or a remaining PDB is 0; and
   a deadline of data transmission determined by the terminal equipment according to implementation.
17. The apparatus according to supplement 16, wherein,
   the time period or the timer is configured by the network or is predefined.
   17a. The apparatus according to supplement 16, wherein,
   a starting point of the time period is the time point at which the delay information report is triggered, or the time point at which the MAC CE including the delay information is generated, or the time point at which the MAC CE including the delay information is transmitted; or,
   the timer is started at the time point at which the delay information report is triggered, or the time point at which the MAC CE including the delay information is generated, or the time point at which the MAC CE including the delay information is transmitted.
18. The apparatus according to supplement 1, wherein,
   the second deadline is denoted by an SFN and/or a slot and/or a symbol and/or an absolute time, or, the second deadline is denoted by an offset relative to a fourth time point
19. The apparatus according to supplement 18, wherein,
   the fourth time point corresponds to a time of an uplink resource or receiving a PDCCH.
20. The apparatus according to supplement 2, wherein,
   the delay information and the data volume information are included in the same MAC CE.
21. The apparatus according to supplement 1, wherein,
   the MAC CE including the delay information is a BSR MAC CE, or the MAC CE is an MAC CE different from a BSR MAC CE.
22. The apparatus according to supplement 1, wherein the apparatus further includes:
   a calculating unit configured to calculate a third remaining time according to the first remaining time and the first time point, and/or calculating a third remaining time according to the second remaining time, by the network device.
23. The apparatus according to supplement 22, wherein the apparatus further includes:
   an allocating unit configured to allocate uplink resources according to the third remaining time.

### Network device

1. A network device, including a memory and a processor, the memory storing a computer program, and the processor being configured to execute the computer program to carry out the method as described in the supplements regarding methods.

### Communication system

1. A communication system, including the above network device and terminal equipment.

## Claims

1. An information processing apparatus, configured in a terminal equipment, **characterized in that** the information processing apparatus comprises:
a triggering unit configured to trigger delay information report; and
a transmitting unit configured to transmit the delay information to a network device, the delay information comprising a first remaining time and a first time point associated with the first remaining time, and/or, the delay information comprising a second remaining time, the second remaining time being a second deadline and/or a time associated with a second time point.

2. The apparatus according to claim 1, wherein,
the delay information report is a buffer status report.

3. The apparatus according to claim 1, wherein the apparatus further comprises:
a generating unit configured to generate an MAC CE comprising the delay information.

4. The apparatus according to claim 3, wherein,
the MAC CE is a BSR MAC CE, or the MAC CE is an MAC CE different from a BSR MAC CE.

5. The apparatus according to claim 1, wherein,
the delay information is information associated with data volume information of data to be transmitted, and/or the first remaining time and/or the second remaining time is/are a time/times associated with the data volume information of the data to be transmitted.

6. The apparatus according to claim 5, wherein,
the delay information and the data volume information are included in the same MAC CE.

7. The apparatus according to claim 5, wherein,
the data to be transmitted are data buffered in a PDU set or a logical channel group or a logical channel, and/or, the data to be transmitted are data buffered by a PDCP entity and/or data buffered by an RLC entity.

8. The apparatus according to claim 5, wherein the first remaining time and/or the second remaining time is/are as follows that:
the data to be transmitted are transmitted to the network device within the first remaining time and/or the second remaining time; or,
the data to be transmitted are transmitted to the network device before the second remaining time.

9. The apparatus according to claim 1, wherein,
the first remaining time is a time derived based on the first time point; and/or, the second remaining time is a time derived based on the second time point.

10. The apparatus according to claim 1, wherein the first time point comprises at least one of the following:
a time point at which the delay information report is triggered;
a time point at which the MAC CE including the delay information is generated;
a time point at which the MAC CE including the delay information is transmitted;
a time point between a time point when the delay information report is triggered and a time point when the MAC CE including the delay information is transmitted; or
a first deadline.

11. The apparatus according to claim 10, wherein,
the time point at which the MAC CE including the delay information is transmitted comprises a first SFN and/or symbol and/or slot of uplink resources for new transmission, or a last SFN and/or symbol and/or slot of uplink resources for new transmission.

12. The apparatus according to claim 10, wherein the first deadline comprises at least one of the following:
a time point at which the first remaining time is 0;
a time point at which a time period or a timer expires; and
a time point at which a PSDB or a remaining PSDB or a PDB or a remaining PDB is 0.

13. The apparatus according to claim 1, wherein,
the first time point is denoted by an SFN and/or a slot and/or a symbol and/or an absolute time, or the first time point is denoted by an offset relative to a third time point.

14. The apparatus according to claim 1, wherein,
the second time point is configured by a network or is preset.

15. The apparatus according to claim 1, wherein,
the second time point comprises a time point at which the MAC CE including the delay information is transmitted.

16. The apparatus according to claim 15, wherein,
the time point at which the MAC CE including the delay information is transmitted comprises the first SFN and/or symbol and/or slot of uplink resources for new transmission, or the last SFN and/or symbol and/or slot of uplink resources for new transmission.

17. The apparatus according to claim 1, wherein the second deadline comprises at least one of the following:
a time point at which a time period or a timer expires;
a time point at which a PSDB or a remaining PSDB or a PDB or a remaining PDB is 0;
a deadline of data transmission determined by the terminal equipment according to implementation.

18. The apparatus according to claim 1, wherein,
the second deadline is denoted by an SFN and/or a slot and/or a symbol and/or an absolute time, or the second deadline is denoted by an offset relative to a fourth time point.

19. An information processing apparatus, configured in a network device, **characterized in that** the information processing apparatus comprises:
a receiving unit configured to receive delay information from a terminal equipment, the delay information comprising a first remaining time and a first time point associated with the first remaining time, and/or, the delay information comprising a second remaining time, the second remaining time being a second deadline and/or a time associated with a second time point.

20. A communication system, comprising a network device and a terminal equipment, **characterized in that**,
the terminal equipment triggers delay information report, and transmits the delay information to the network device, the delay information comprising a first remaining time and a first time point associated with the first remaining time, and/or, the delay information comprising a second remaining time, the second remaining time being a second deadline and/or a time associated with a second time point;
and the network device receives the delay information from the terminal equipment.
